(19) Europäisches Patentamt
European Patent Office
Office européen des brevets

(11) **EP 4 412 287 A1**

(12) **EUROPEAN PATENT APPLICATION**
published in accordance with Art. 153(4) EPC

(43) Date of publication:
**07.08.2024 Bulletin 2024/32**

(21) Application number: **22882799.4**

(22) Date of filing: **17.10.2022**

(51) International Patent Classification (IPC):
**H04W 24/02** (2009.01)

(52) Cooperative Patent Classification (CPC):
**H04L 1/00; H04W 24/02; H04W 28/04; H04W 28/12**

(86) International application number:
**PCT/CN2022/125651**

(87) International publication number:
**WO 2023/066193 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2021 CN 202111231099**

(71) Applicant: **Huawei Technologies Co., Ltd.
Shenzhen, Guangdong 518129 (CN)**

(72) Inventors:
• **WANG, Jian
  Shenzhen, Guangdong 518129 (CN)**
• **LI, Rong
  Shenzhen, Guangdong 518129 (CN)**
• **ZHANG, Gongzheng
  Shenzhen, Guangdong 518129 (CN)**
• **WANG, Jun
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS, SYSTEM, STORAGE MEDIUM, AND PROGRAM PRODUCT**

(57) This application discloses a communication method, apparatus, and system, a storage medium, and a program product. The method includes: A first distributed node sends communication mechanism indication information to at least one second distributed node adjacent to the first distributed node, where the communication mechanism indication information is obtained based on a robustness requirement of a distributed learning system; the first distributed node receives at least one piece of first data from the at least one second distributed node, where the at least one piece of first data is transmitted by the at least one second distributed node based on the communication mechanism indication information; and the first distributed node performs inference based on second data of the first distributed node and the at least one piece of first data by using a distributed learning model. According to the solution, a target node indicates a communication mechanism to a neighboring node based on the robustness requirement of the distributed learning system, and the neighboring node transmits data according to the communication mechanism, to improve efficiency and robustness of distributed inference.

FIG. 7

**Description**

This application claims priority to Chinese Patent Application No. 202111231099.2, filed with the China National Intellectual Property Administration on October 21, 2021 and entitled "COMMUNICATION METHOD, APPARATUS, AND SYSTEM, STORAGE MEDIUM, AND PROGRAM PRODUCT", which is incorporated herein by reference in its entirety.

**TECHNICAL FIELD**

This application relates to the field of communication technologies, and in particular, to a communication method, apparatus, and system, a storage medium, and a program product.

**BACKGROUND**

With further improvement of network computing capabilities and an explosion of big data, introducing artificial intelligence (artificial intelligence, AI) technologies into wireless network designs is one of the important methods to break through the bottleneck of conventional wireless technologies. A node that obtains data and a node with computing power resources can be organized through distributed inference, to complete distributed learning.

During distributed inference, information exchange between adjacent nodes needs to be completed through wireless communication. Due to impact of a path loss, shadowing, fading, and noise of a wireless channel, a signal may not be transmitted correctly, affecting inference performance. An existing wireless transmission mechanism aims to improve a throughput of a system. However, distributed inference has a specific tolerance for a transmission error. If the existing wireless transmission mechanism is used, communication resources may be wasted, and a system latency may be increased.

Therefore, a communication solution suitable for distributed inference is urgently needed to improve inference performance.

**SUMMARY**

This application provides a communication method, apparatus, and system, a storage medium, and a program product, to ensure performance of distributed inference by using an efficient wireless transmission mechanism while comprehensively taking a wireless transmission error into consideration.

According to a first aspect, a communication method is provided, and is applied to a distributed learning system. The distributed learning system includes at least two distributed nodes. The at least two distributed nodes include a first distributed node and at least one second distributed node. The method includes: A first distributed node sends communication mechanism indication information to at least one second distributed node adjacent to the first distributed node, where the communication mechanism indication information is obtained based on a robustness requirement of a distributed learning system; the first distributed node receives at least one piece of first data from the at least one second distributed node, where the at least one piece of first data is transmitted by the at least one second distributed node based on the communication mechanism indication information; and the first distributed node performs inference based on second data of the first distributed node and the at least one piece of first data by using a distributed learning model. In the first aspect, the first distributed node may be a target node for distributed inference, and the at least one second distributed node may be a neighboring node of the target node. The target node indicates a communication mechanism to the neighboring node based on the robustness requirement of the distributed learning system, and the neighboring node transmits data according to the communication mechanism, to improve efficiency and robustness of distributed inference. Targeting at robustness of a distributed inference result has lower complexity and enables appropriate use of communication resources and a low system latency.

In a possible implementation, the method further includes: The first distributed node sends first indication information to the at least one second distributed node, or the first distributed node sends first indication information to a central node, so that the central node forwards the first indication information to the at least one second distributed node, where the first indication information indicates the at least one second distributed node to send the at least one piece of first data to the first distributed node; and the first indication information includes at least one piece of the following information: resource scheduling information for transmitting the at least one piece of first data, inference task information, an amount of requested data, or a type of requested data. In this implementation, the first distributed node explicitly indicates, to the at least one second distributed node by using the first indication information, at least one piece of the following information: the resource scheduling information for transmitting the at least one piece of first data, the inference task information, the amount of the requested data, or the type of the requested data, so that the at least one second distributed node transmits the at least one piece of first data based on the foregoing information, to ensure performance of distributed inference.

In a possible implementation, the method further includes: The first distributed node sends second indication information to the at least one second distributed node, where the second indication information indicates that the distributed learning system is in a machine learning inference mode. In this implementation, the second indication information explicitly indicates that the distributed learning system is in the machine learning inference mode.

In another possible implementation, before the first distributed node sends the communication mechanism indication information to the at least one second distributed node, the method further includes: The first distributed node receives at least one piece of third data from the at least one second distributed node; and the first distributed node performs inference based on the second data and the at least one piece of third data by using the distributed learning model, and determines that an inference result is not robust. In this implementation, when the first distributed node performs inference and determines that the inference result is not robust, the first distributed node sends the communication mechanism indication information to the at least one second distributed node. The communication mechanism indication information is obtained based on the robustness requirement of the distributed learning system, so that the at least one second distributed node transmits the at least one piece of first data based on the communication mechanism indication information, to improve robustness of subsequent inference.

In another possible implementation, the communication mechanism indication information indicates the at least one second distributed node to transmit the at least one piece of first data, or the communication mechanism indication information indicates the at least one second distributed node to adjust a communication mechanism and transmit the at least one piece of first data according to an adjusted communication mechanism, and the at least one piece of first data is retransmitted data of the at least one piece of third data. In this implementation, there may be a plurality of communication mechanism adjustment manners to improve robustness of distributed inference, for example, about whether to perform retransmission, a required transmit power, and a required level of a modulation and coding scheme.

In another possible implementation, that the first distributed node determines that the inference result is not robust includes any one of the following:

The first distributed node determines that a robustness probability is less than a specified target robustness probability, where the robustness probability is a probability that a quantity of transmitted erroneous bits in the at least one piece of first data is less than a maximum quantity of erroneous bits, and the maximum quantity of erroneous bits is a maximum quantity of erroneous bits that are allowed to be transmitted if the robustness requirement of the distributed learning system is satisfied; the first distributed node determines that a bit error rate of the at least one second distributed node is greater than a target bit error rate, where the target bit error rate is a maximum allowable bit error rate that satisfies the robustness requirement of the distributed learning system; or the first distributed node determines that a maximum inference bias is greater than a specified inference bias, where the maximum inference bias is a maximum value among all possible inference biases. In this implementation, for an outage communication system and a non-outage communication system, a plurality of manners are provided to accurately determine whether the inference result is robust.

In another possible implementation, the communication mechanism indication information includes at least one of the following: a communication quality requirement; retransmission indication information; or communication mechanism adjustment information.

In another possible implementation, the communication quality requirement includes a first bit error rate, where the first bit error rate is the maximum allowable bit error rate that satisfies the robustness requirement of the distributed learning system; the retransmission indication information includes a data receiving failure indication and/or a transmission resource used for a next data transmission; the communication mechanism adjustment information includes a suggested first transmit power and/or a suggested transmission resource used for a next data transmission, where the first transmit power is associated with the target bit error rate and a status of a first channel between the first distributed node and the at least one second distributed node, or the first transmit power is associated with a first transmission rate of the at least one second distributed node and a status of a second channel between the first distributed node and the at least one second distributed node; or the communication mechanism adjustment information includes a suggested level of a first modulation and coding scheme and/or a suggested transmission resource used for a next data transmission, where the level of the first modulation and coding scheme is associated with a second transmission rate of the at least one second distributed node and a status of a third channel between the first distributed node and the at least one second distributed node. In this implementation, when an error occurs in wireless transmission and causes an inference result that is not robust, a neighboring node that does not satisfy a communication requirement may be indicated to retransmit the first data, adjust a transmit power, or adjust a level of a modulation and coding scheme, to improve robustness of distributed inference.

According to a second aspect, a communication method is provided, and is applied to a distributed learning system. The distributed learning system includes at least two distributed nodes, the at least two distributed nodes include at least one first distributed node and a second distributed node. The method includes: The second distributed node receives communication mechanism indication information from the at least one first distributed node, where the communication mechanism indication information is obtained based on a robustness requirement of the distributed learning system; and the second distributed node sends first data to the at least one first distributed node based on the communication mechanism indication information. In the second aspect, the first distributed node may be a target node for distributed inference, and the at least one second distributed node may be a neighboring node of the target node. The target node indicates a communication mechanism to the neighboring node based on the robustness requirement of the distributed learning system, and the neighboring node transmits data according to the communication mechanism, to improve efficiency and robustness of distributed inference.

In a possible implementation, the method further includes: The second distributed node receives first indication information from the at least one first distributed node or a central node, where the first indication information indicates the second distributed node to send the first data to the at least one first distributed node, where the first indication information includes at least one piece of the following information: resource scheduling information for transmitting the first data, inference task information, an amount of requested data, or a type of requested data.

In a possible implementation, the method further includes: The second distributed node receives second indication information from the at least one first distributed node or the central node, where the second indication information indicates that the distributed learning system is in a machine learning inference mode.

In another possible implementation, the communication mechanism indication information indicates the second distributed node to transmit the first data, or the communication mechanism indication information indicates the second distributed node to adjust a communication mechanism and transmit the first data according to an adjusted communication mechanism, and the first data is retransmitted data.

In another possible implementation, the communication mechanism indication information includes at least one of the following: a communication quality requirement; retransmission indication information; or communication mechanism adjustment information.

In another possible implementation, the communication quality requirement includes a first bit error rate, where the first bit error rate is the maximum allowable bit error rate that satisfies the robustness requirement of the distributed learning system; or the retransmission indication information includes a data receiving failure indication and/or a transmission resource used for a next data transmission; the communication mechanism adjustment information includes a suggested first transmit power and/or a suggested transmission resource used for a next data transmission, where the first transmit power is associated with the target bit error rate and a status of a first channel between the second distributed node and the at least one first distributed node, and the target bit error rate is a maximum allowable bit error rate that satisfies the robustness requirement of the distributed learning system; or the first transmit power is associated with a first transmission rate of the second distributed node and a status of a second channel between the second distributed node and the at least one first distributed node; or the communication mechanism adjustment information includes a suggested level of a first modulation and coding scheme and/or a suggested transmission resource used for a next data transmission, where the level of the first modulation and coding scheme is associated with a second transmission rate of the second distributed node and a status of a third channel between the second distributed node and the at least one first distributed node.

In another possible implementation, that the second distributed node sends first data to the at least one first distributed node based on the communication mechanism indication information includes: The second distributed node determines a second transmit power; and the second distributed node sends the first data to the at least one first distributed node at the second transmit power, where the second transmit power is a smaller value in a first maximum transmit power allowed by the second distributed node and the first transmit power; or the second transmit power is a smaller value in a first maximum transmit power allowed by the second distributed node and a second maximum transmit power, where the second maximum transmit power is a maximum value in a plurality of first transmit powers received by the second distributed node from a plurality of first distributed nodes.

In another possible implementation, that the second distributed node sends first data to the at least one first distributed node based on the communication mechanism indication information includes: The second distributed node determines a second modulation and coding scheme; and the second distributed node sends the first data to the at least one first distributed node according to the second modulation and coding scheme, where the second modulation and coding scheme is of the same level as the first modulation and coding scheme, or the second modulation and coding scheme is of a lowest level in a plurality of levels of the first modulation and coding scheme received by the second distributed node from the at least one first distributed node adjacent to the second distributed node.

According to a third aspect, a communication apparatus is provided, and is used in a distributed learning system. The distributed learning system includes at least two distributed nodes, and the at least two distributed nodes include the communication apparatus and at least one second distributed node. The communication apparatus may implement the communication method according to the first aspect. For example, the communication apparatus may be a chip or a device. The foregoing method may be implemented by software, hardware, or hardware executing corresponding software.

In a possible implementation, the apparatus includes a transceiver unit and a processing unit. The transceiver unit is configured to send communication mechanism indication information to the at least one second distributed node adjacent to the communication apparatus, where the communication mechanism indication information is obtained based on a robustness requirement of a distributed learning system; the transceiver unit is further configured to receive at least one piece of first data from the at least one second distributed node, where the at least one piece of first data is transmitted by the at least one second distributed node based on the communication mechanism indication information; and the processing unit is configured to perform inference by using a distributed learning model based on second data of the communication apparatus and the at least one piece of first data.

Optionally, the transceiver unit is further configured to send first indication information to the at least one second distributed node, or the transceiver unit is further configured to send first indication information to a central node, so that the central node forwards the first indication information to the at least one second distributed node, where the first indication information indicates the at least one second distributed node to send the at least one piece of first data to the communication apparatus; and the first indication information includes at least one piece of the following information: resource scheduling information for transmitting the at least one piece of first data, inference task information, an amount of requested data, or a type of requested data.

Optionally, the transceiver unit is further configured to send second indication information to the at least one second distributed node, where the second indication information indicates that the distributed learning system is in a machine learning inference mode.

Optionally, the transceiver unit is further configured to receive at least one piece of third data from the at least one second distributed node; and the processing unit is further configured to: perform inference based on the second data and the at least one piece of third data by using the distributed learning model, and determine that an inference result is not robust.

Optionally, the communication mechanism indication information indicates the at least one second distributed node to transmit the at least one piece of first data, or the communication mechanism indication information indicates the at least one second distributed node to adjust a communication mechanism and transmit the at least one piece of first data according to an adjusted communication mechanism, and the at least one piece of first data is retransmitted data of the at least one piece of third data.

Optionally, the processing unit is configured to perform any one of the following: determining that a robustness probability is less than a specified target robustness probability, where the robustness probability is a probability that a quantity of transmitted erroneous bits in the at least one piece of first data is less than a maximum quantity of erroneous bits, and the maximum quantity of erroneous bits is a maximum quantity of erroneous bits that are allowed to be transmitted if the robustness requirement of the distributed learning system is satisfied; determining that a bit error rate of the at least one second distributed node is greater than a target bit error rate, where the target bit error rate is a maximum allowable bit error rate that satisfies the robustness requirement of the distributed learning system; or determining that a maximum inference bias is greater than a specified inference bias, where the maximum inference bias is a maximum value among all possible inference biases.

Optionally, the communication mechanism indication information includes at least one of the following: a communication quality requirement; retransmission indication information; or communication mechanism adjustment information.

Optionally, the communication quality requirement includes a first bit error rate, where the first bit error rate is the maximum allowable bit error rate that satisfies the robustness requirement of the distributed learning system; the retransmission indication information includes a data receiving failure indication and/or a transmission resource used for a next data transmission; the communication mechanism adjustment information includes a suggested first transmit power and/or a suggested transmission resource used for a next data transmission, where the first transmit power is associated with the target bit error rate and a status of a first channel between the communication apparatus and the at least one second distributed node, or the first transmit power is associated with a first transmission rate of the at least one second distributed node and a status of a second channel between the communication apparatus and the at least one second distributed node; or the communication mechanism adjustment information includes a suggested level of a first modulation and coding scheme and/or a suggested transmission resource used for a next data transmission, where the level of the first modulation and coding scheme is associated with a second transmission rate of the at least one second distributed node and a status of a third channel between the communication apparatus and the at least one second distributed node.

In another possible implementation, the communication apparatus is configured to perform the method according to the first aspect and the possible implementations of the first aspect.

According to a fourth aspect, a communication apparatus is provided, and is used in a distributed learning system. The distributed learning system includes at least two distributed nodes, and the at least two distributed nodes include at least one first distributed node and the communication apparatus. The communication apparatus may implement the communication method according to the second aspect. For example, the communication apparatus may be a chip or a device. The foregoing method may be implemented by software, hardware, or hardware executing corresponding software.

In a possible implementation, the communication apparatus includes a transceiver unit, and may further include a processing unit. The transceiver unit is configured to receive communication mechanism indication information from the at least one first distributed node, where the communication mechanism indication information is obtained based on a robustness requirement of the distributed learning system; and the transceiver unit is further configured to send first data to the at least one first distributed node based on the communication mechanism indication information.

Optionally, the transceiver unit is further configured to receive first indication information from the at least one first distributed node or a central node, where the first indication information indicates the communication apparatus to send the first data to the at least one first distributed node, where the first indication information includes at least one piece of the following information: resource scheduling information for transmitting the first data, inference task information, an amount of requested data, or a type of requested data.

Optionally, the transceiver unit is further configured to receive second indication information sent by the at least one first distributed node or the central node, where the second indication information indicates that the distributed learning system is in a machine learning inference mode.

Optionally, the communication mechanism indication information indicates the communication apparatus to transmit the first data, or the communication mechanism indication information indicates the communication apparatus to adjust a communication mechanism and transmit the first data according to an adjusted communication mechanism, and the first data is retransmitted data.

Optionally, the communication mechanism indication information includes at least one of the following: a communication quality requirement; retransmission indication information; or communication mechanism adjustment information.

Optionally, the communication quality requirement includes a first bit error rate, where the first bit error rate is the maximum allowable bit error rate that satisfies the robustness requirement of the distributed learning system; or the retransmission indication information includes a data receiving failure indication and/or a transmission resource used for a next data transmission; the communication mechanism adjustment information includes a suggested first transmit power and/or a suggested transmission resource used for a next data transmission, where the first transmit power is associated with the target bit error rate and a status of a first channel between the communication apparatus and the at least one first distributed node, and the target bit error rate is a maximum allowable bit error rate that satisfies the robustness requirement of the distributed learning system; or the first transmit power is associated with a first transmission rate of the communication apparatus and a status of a second channel between the communication apparatus and the at least one first distributed node; or the communication mechanism adjustment information includes a suggested level of a first modulation and coding scheme and/or a suggested transmission resource used for a next data transmission, where the level of the first modulation and coding scheme is associated with a second transmission rate of the communication apparatus and a status of a third channel between the communication apparatus and the at least one first distributed node.

Optionally, the apparatus further includes the processing unit, configured to determine a second transmit power. The transceiver unit is further configured to send the first data to the at least one first distributed node at the second transmit power, where the second transmit power is a smaller value in a first maximum transmit power allowed by the communication apparatus and the first transmit power; or the second transmit power is a smaller value in a first maximum transmit power allowed by the communication apparatus and a second maximum transmit power, where the second maximum transmit power is a maximum value in a plurality of first transmit powers received by the communication apparatus from a plurality of first distributed nodes.

Optionally, the apparatus further includes the processing unit, configured to determine a second modulation and coding scheme. The transceiver unit is further configured to send the first data to the at least one first distributed node according to the second modulation and coding scheme, where the second modulation and coding scheme is of the same level as the first modulation and coding scheme, or the second modulation and coding scheme is of a lowest level in a plurality of levels of the first modulation and coding scheme received by the communication apparatus from the at least one first distributed node adjacent to the communication apparatus.

In another possible implementation, the communication apparatus is configured to perform the method according to the second aspect and the possible implementations of the second aspect.

In still another possible implementation, the communication apparatus according to the third aspect or the fourth aspect includes a processor coupled to a memory. The processor is configured to support the apparatus in performing a corresponding function in the foregoing communication method. The memory is coupled to the processor, and stores a computer program (or computer-executable instructions) and/or data necessary for the apparatus. Optionally, the communication apparatus may further include a communication interface, configured to support communication, for example, data and/or signal sending or receiving, between the apparatus and another network element. For example, the communication interface may be a transceiver, a circuit, a bus, a module, or a communication interface of another type. Optionally, the memory may be located inside the communication apparatus and integrated with the processor, or may be located outside the communication apparatus.

In yet another possible implementation, the communication apparatus according to the third aspect or the fourth aspect includes a processor and a transceiver apparatus. The processor is coupled to the transceiver apparatus. The processor is configured to execute a computer program or instructions, to control the transceiver apparatus to receive and transmit information. When the processor executes the computer program or the instructions, the processor is further configured to perform the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is the chip, the transceiver apparatus is a transceiver circuit or an input/output interface.

When the communication apparatus according to the third aspect or the fourth aspect is a chip, a sending unit may be an output unit, for example, an output circuit or a communication interface, and a receiving unit may be an input unit, for example, an input circuit or a communication interface. When the communication apparatus is a terminal, a sending unit may be a transmitter or a transmitter machine, and a receiving unit may be a receiver or a receiver machine.

According to a fifth aspect, a distributed learning system is provided. The distributed learning system includes at least two distributed nodes, and the at least two distributed nodes include the communication apparatus according to any one of the third aspect or the implementations of the third aspect, and at least one communication apparatus according to any one of the fourth aspect or the implementations of the fourth aspect.

According to a sixth aspect, a computer-readable storage medium is provided, and stores a computer program or instructions. When the program or the instructions are executed by a processor, the method according to any one of the first aspect or the implementations of the first aspect is performed, or the method according to any one of the second aspect or the implementations of the second aspect is performed.

According to a seventh aspect, a computer program product is provided. When the computer program product is executed on a computing device, the method according to any one of the first aspect or the implementations of the first aspect is performed, or the method according to any one of the second aspect or the implementations of the second aspect is performed.

## BRIEF DESCRIPTION OF DRAWINGS

FIG. 1 is a schematic diagram of a distributed learning system according to this application;
FIG. 2 is a schematic diagram of an example of a structure of a detailed distributed learning system;
FIG. 3 is a block diagram of a wireless communication system according to an embodiment of this application;
FIG. 4 is a schematic flowchart of an example of automatic repeat request;
FIG. 5 is a schematic flowchart of an example of a centralized power control method;
FIG. 6 is a schematic diagram of an example of adaptive modulation and coding;
FIG. 7 is a schematic flowchart of a communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14A and FIG. 14B are a schematic flowchart of another communication method according to an embodiment of this application;
FIG. 15A and FIG. 15B are a schematic flowchart of another communication method according to an embodiment of this application;
FIG. 16A and FIG. 16B are a schematic flowchart of another communication method according to an embodiment of this application;
FIG. 17A and FIG. 17B are a schematic flowchart of another communication method according to an embodiment of this application;
FIG. 18A and FIG. 18B are a schematic diagram of a simulation result according to an embodiment of this application;
FIG. 19 is a schematic diagram of a structure of a communication apparatus according to an embodiment of this application; and
FIG. 20 is a schematic diagram of a structure of another communication apparatus according to an embodiment of this application.

**DESCRIPTION OF EMBODIMENTS**

Embodiments of this application are described below with reference to the accompanying drawings in embodiments of this application.

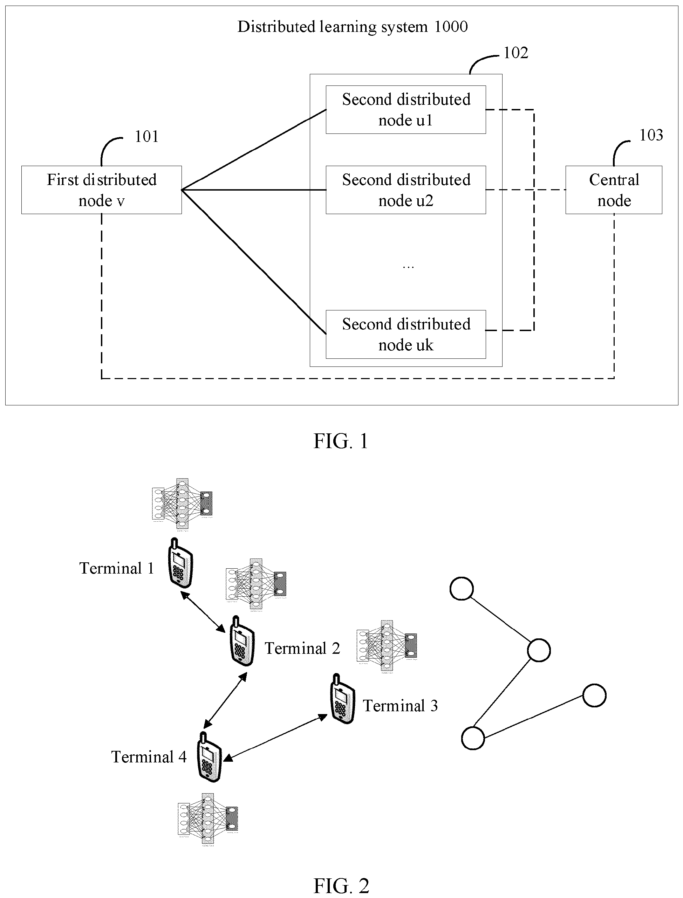

FIG. 1 is a schematic diagram of a distributed learning system according to this application. The distributed learning system 1000 includes at least two distributed nodes. The at least two distributed nodes include a first distributed node 101 (which may be referred to as a target node v) and at least one second distributed node 102 (for example, second distributed nodes u1 to uk shown in the figure, which may be referred to as neighboring nodes of the target node v) adjacent to the first distributed node 101. The first distributed node 101 and the at least one second distributed node 102 may communicate with each other, and may be used in a wireless communication system, for example, for mobile communication, satellite communication, or a wireless sensor network. For example, the wireless communication system mentioned in this application includes but is not limited to a narrow band-Internet of Things (narrow band-internet of things, NB-IoT) system, a long term evolution (long term evolution, LTE) system, three typical application scenarios (enhanced mobile broadband (enhanced mobile broadband, eMBB), ultra-reliable and low latency communication (ultra-reliable and low latency communication, URLLC), and massive machine type communication (massive machine type communication, mMTC)) of a $5^{th}$ generation ($5^{th}$ generation, 5G) mobile communication system, and a next generation mobile communication system.

The distributed learning system 1000 may further include a central node 103. The first distributed node 101 and the at least one second distributed node 102 may be connected to the central node 103. The first distributed node 101 and the at least one second distributed node 102 may directly communicate with each other, and signaling/data between the nodes may alternatively be forwarded by the central node 103.

The first distributed node/the second distributed node may be an access network device, or may be various types of terminals. FIG. 2 is a schematic diagram of an example of a structure of a detailed distributed learning system. In the distributed learning system, both a first distributed node and a second distributed node are terminals. The terminals have a distributed learning capability. The detailed distributed learning system on the left side in FIG. 2 may be represented as a schematic diagram of the distributed learning system on the right side in FIG. 2.

The access network device mentioned above may be any node that has a wireless transceiver function, including but not limited to: a base station NodeB, an evolved base station eNodeB, a base station in a 5G communication system, a base station or a network node in a future communication system, an access node in a Wi-Fi system, a wireless relay node, a wireless backhaul node, and the like. Alternatively, the access network device may be a radio controller in a cloud radio access network (cloud radio access network, CRAN) scenario. The access network device may alternatively be a small cell, a transmission reference point (transmission reference point, TRP), a transmission point (transmission point, TP), a mobile switching center, a device that undertakes a base station function in device-to-device (Device-to-Device, D2D), vehicle-to-everything (vehicle-to-everything, V2X), machine-to-machine (machine, M2M) communication, or the like. A specific technology and a specific node form that are used for the network node are not limited in embodiments of this application.

The terminals are nodes having a wireless transceiver function, and may be deployed on land, including an indoor or outdoor, or hand-held, wearable, or vehicle-mounted node; may be deployed on a water surface, for example, on a ship; or may be deployed in air, for example, on an aircraft, an unmanned aerial vehicle, a balloon, or a satellite. The terminal may be a mobile phone (mobile phone), a tablet computer (pad), a computer having a wireless transceiver function, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in smart grid (smart grid), a wireless terminal in transportation security (transportation safety), a wireless terminal in smart city (smart city), a wireless terminal in smart home (smart home), or the like. An application scenario is not limited in embodiments of this application. Sometimes, the terminal is also referred to as user equipment (user equipment, UE), an access terminal device, a UE unit, a mobile station, a remote station, a remote terminal device, a mobile device, a wireless communication device, a UE agent, a UE apparatus, or the like.

The first distributed node/the second distributed node may perform data sampling by using a data acquisition module of the first distributed node/the second distributed node, and an acquired sample is used to train a machine learning model to complete an assigned machine learning task. To complete the machine learning task, the first distributed node and the at least one second distributed node may need to exchange information with each other. Content to be exchanged may include at least one of the following: a data sample acquired by each distributed node, an intermediate result of local inference, and a final result of local inference. Such information exchange needs to be completed through wireless communication. Therefore, performance of wireless communication affects completion of the machine learning task.

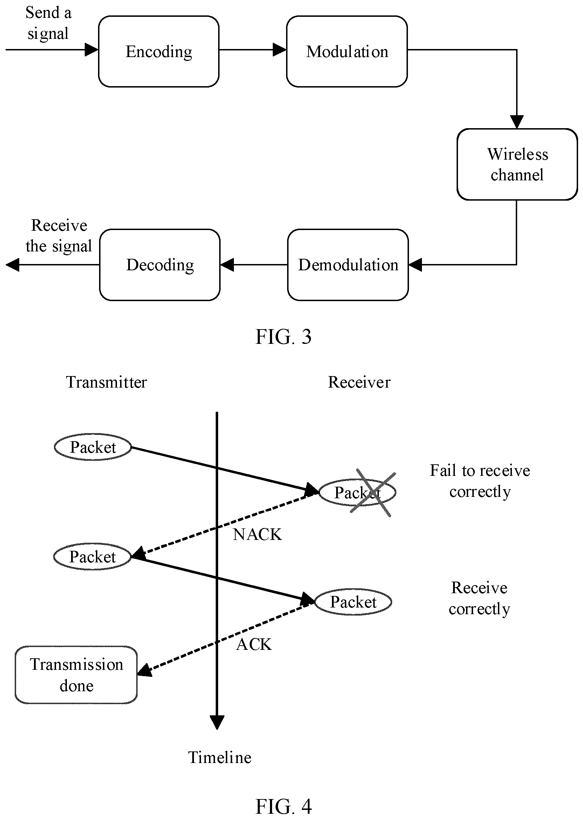

During distributed inference, information exchange between adjacent nodes needs to be completed through wireless communication. A general block diagram of a wireless communication system is shown in FIG. 3. To be specific, data to be sent is coded (including source coding and channel coding) and modulated to obtain a modulation symbol, and is then sent.

Due to impact of a path loss, shadowing, fading, and noise of a wireless channel, a signal may not be transmitted correctly, affecting inference performance. An existing wireless transmission mechanism aims to improve a throughput of a system. However, distributed inference has a specific tolerance for a transmission error. If the existing wireless transmission mechanism is used, communication resources may be wasted, and a system latency may be increased. Therefore, a communication solution suitable for distributed inference is urgently needed to improve inference performance.

FIG. 4 is a schematic flowchart of an example of an automatic repeat request (automatic repeat request, ARQ). An ARQ technology can ensure transmission reliability. Specifically, when a receiver successfully receives transmitted information, the receiver feeds back an acknowledgment (acknowledgment, ACK) signal to a transmitter. Otherwise, the receiver feeds back a non-acknowledgment (non-acknowledgment, NACK) signal to the transmitter, and the transmitter retransmits the information until an ACK signal is received or a maximum quantity of retransmissions is reached.

However, in this technology, transmission reliability is used as a criterion for determining retransmission. In a distributed learning system, a task of the system is to ensure robustness of an inference result, and the system has a specific tolerance for a transmission error (that is, an error to a specific degree does not affect the inference result of the distributed learning system). In this case, if the retransmission technology is used for retransmission, communication resources are wasted, and a system latency is increased.

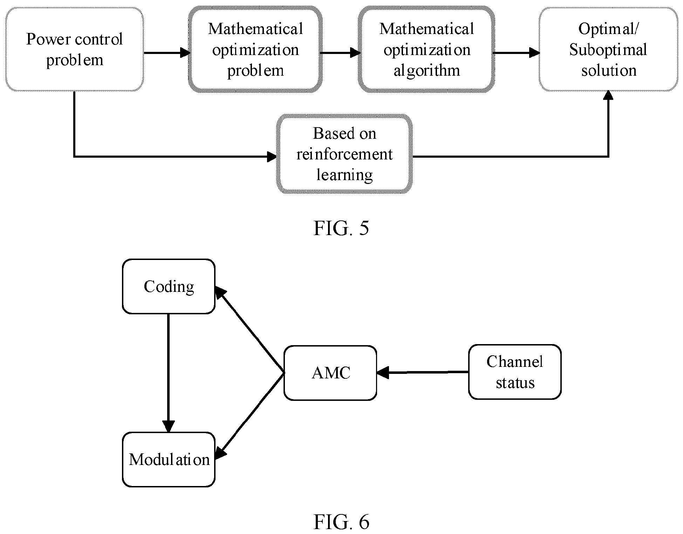

FIG. 5 is a schematic flowchart of an example of a centralized power control method. In a conventional cellular network architecture, a base station usually performs centralized power control. Specifically, a problem of power control is modeled into a mathematical optimization problem. Generally, this problem is a complex non-convex optimization problem that can be solved through fractional programming, weighted least mean square errors, or another method. Another approach is to implement power control based on reinforcement learning. To be specific, a smart agent implemented by a neural network is deployed on a base station of each cell, and a power control policy is continuously adjusted through interaction with an environment, to complete a power control task.

However, a power control method based on a mathematical optimization algorithm is usually complex for solving, and generally needs to be solved by using an iterative algorithm. The power control method based on reinforcement learning is complex in a model training phase, and is difficult to converge. In addition, scalability is extremely poor. When a quantity of cells in the environment changes, a smart agent needs to be retrained. In a distributed learning system, the system needs to adjust a power quickly to adapt to a complex and changing wireless environment, and if this power control solution is used for the adjustment, this requirement cannot be adjusted.

FIG. 6 is a schematic diagram of an example of adaptive modulation and coding (adaptive modulation and coding, AMC). In a communication system, a modulation and coding scheme (modulation and coding scheme, MCS) is generally selected based on a channel status. Transmission quality can be controlled by adjusting the MCS. Using a cellular network such as LTE or new radio (new radio, NR) as an example, in downlink communication, a terminal performs channel status measurement based on a reference signal sent by a base station, and feeds back a channel status (or referred to as channel quality) to the base station by using a channel quality indicator (channel quality indicator, CQI). The base station determines a level of the MCS with reference to the CQI, and sends the level of the MCS to the terminal by using downlink control information (downlink control information, DCI), to indicate a level of an MCS that should be used by the terminal. In uplink communication, the base station directly performs channel status measurement based on a reference signal sent by the terminal, determines a level of the MCS, and sends the level of the MCS to the terminal by using DCI. When the channel status changes during the channel measurement, the base station adaptively adjusts the level of the MCS. For example, when the channel status becomes worse, the base station lowers the level of the MCS, to reduce a throughput over a communication link and ensure appropriate reception and demodulation of communication information. When the channel status becomes better, the base station raises the level of the MCS, to improve a throughput over a communication link.

In this method, a throughput of a communication system is used as a performance indicator for adjusting the modulation and coding scheme. In a distributed learning system, a task of the system is to ensure robustness of an inference result. In this case, if an adaptive modulation and coding scheme is used for adjustment, this requirement cannot be satisfied.

In view of this, this application provides a communication solution applied to a distributed learning system. The distributed learning system includes at least two distributed nodes. The at least two distributed nodes include a first distributed node and at least one second distributed node. The method includes: The first distributed node sends communication mechanism indication information to the at least one second distributed node adjacent to the first distributed node, where the communication mechanism indication information is obtained based on a robustness requirement of the distributed learning system; the first distributed node receives at least one piece of first data from the at least one second distributed node, where the at least one piece of first data is transmitted by the at least one second distributed node based on the communication mechanism indication information; and the first distributed node performs inference based on second data of the first distributed node and the at least one piece of first data by using a distributed learning model. This solution aims to improve robustness of distributed inference. The solution in this application is used to improve robustness of distributed inference by using an efficient wireless transmission mechanism while comprehensively taking a wireless transmission error into consideration.

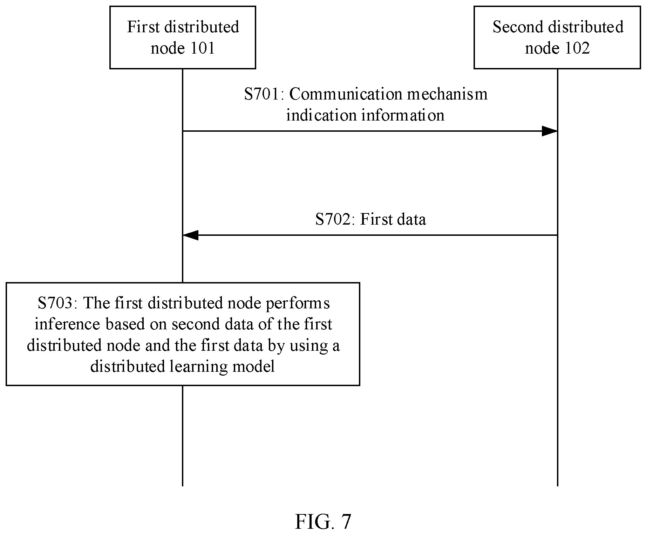

FIG. 7 is a schematic flowchart of a communication method according to an embodiment of this application. The method is applied to a distributed learning system. The distributed learning system includes at least two distributed nodes, and the at least two distributed nodes include a first distributed node and at least one second distributed node. This embodiment is described by using an example of a process of interaction between the first distributed node and any second distributed node in the at least one second distributed node. The following process of interaction between the first distributed node and each second distributed node may be performed simultaneously or separately. This is not limited in this application. The method may include the following steps:

S701: The first distributed node sends communication mechanism indication information to the second distributed node adjacent to the first distributed node.

Correspondingly, the second distributed node receives the communication mechanism indication information.

The first distributed node is a target node, and may be the first distributed node 101 in the distributed learning system shown in FIG. 1. The second distributed node may be the second distributed node 102 in the distributed learning system shown in FIG. 1. The first distributed node 101 is adjacent to the second distributed node 102, and the second distributed node 102 is also referred to as a neighboring node of the first distributed node.

The first distributed node 101 may obtain second data. The second data may be at least one of the following: a data sample acquired by the first distributed node by using a data acquisition module of the first distributed node, an intermediate result of local inference, and a final result of local inference. The second data is used for an inference task of a machine learning model. To complete inference of the machine learning model, the first distributed node 101 and the adjacent second distributed node 102 may need to exchange information with each other. Content to be exchanged may include at least one of the following: a data sample acquired by the second distributed node, an intermediate result of local inference, and a final result of local inference. Such information exchange needs to be completed through wireless communication. Therefore, performance of wireless communication affects completion of the machine learning task. In this embodiment, the first distributed node 101 sends the communication mechanism indication information to the second distributed node 102. The communication mechanism indication information indicates a communication mechanism to be used by the second distributed node 102 to transmit data. The communication mechanism indication information is obtained based on a robustness requirement of the distributed learning system.

S702: The second distributed node sends first data to the first distributed node.

Correspondingly, the first distributed node receives the first data from the second distributed node.

After receiving the communication mechanism indication information sent by the first distributed node 101, each second distributed node 102 transmits the first data of the second distributed node 102 to the first distributed node 101 based on the communication mechanism indication information. That is, the first data is transmitted by the second distributed node 102 based on the communication mechanism indication information. The first distributed node 101 receives the first data transmitted by the second distributed node 102. The first data includes at least one of the following: a data sample acquired by the second distributed node 102, an intermediate result of local inference, and a final result of local inference.

S703: The first distributed node performs inference by using the distributed learning model based on the second data of the first distributed node and the first data.

After receiving the first data, the first distributed node inputs the second data of the first distributed node and the first data into the distributed learning model to perform inference. As the second distributed node 102 transmits the first data based on the communication mechanism indication information, and the communication mechanism indication information is obtained based on the robustness requirement of the distributed learning system, robustness of distributed inference can be improved when inference is performed by using the distributed learning model based on the second data and the first data.

Unlike communication mechanism adjustment in a conventional wireless communication system that targets at a system throughput, a packet loss rate, and a latency, the method provided in this embodiment uses robustness of distributed inference as a performance indicator. This is more applicable to a wireless communication system that undertakes a distributed learning task.

According to the communication method provided in this embodiment of this application, the target node indicates a communication mechanism to the neighboring node based on the robustness requirement of the distributed learning system, and the neighboring node transmits data according to the communication mechanism, to improve efficiency and robustness of distributed inference.

This method aims to improve robustness of distributed inference, not to improve a system throughput. The method improves robustness of distributed inference by using an efficient wireless transmission mechanism while comprehensively taking a wireless transmission error into consideration.

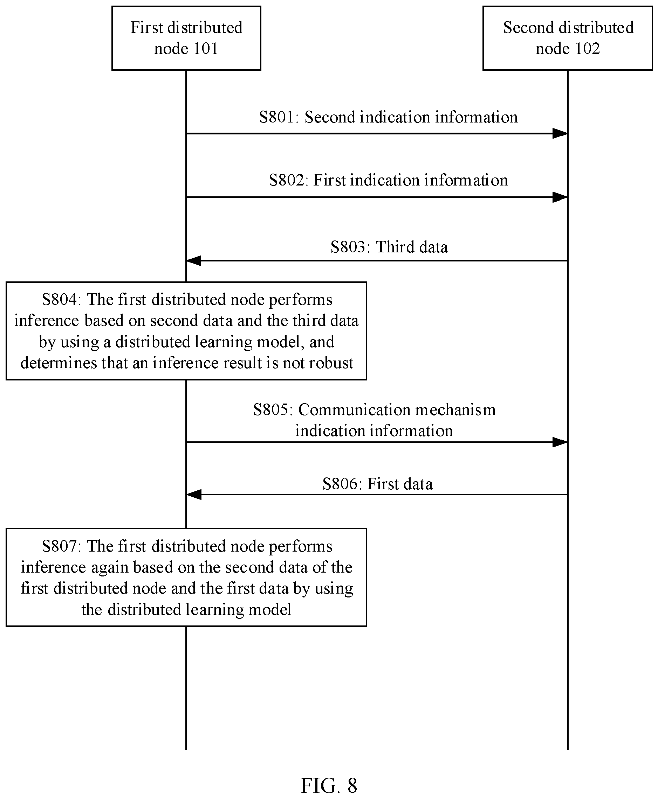

FIG. 8 is a schematic flowchart of another communication method according to an embodiment of this application. The method is applied to a distributed learning system. The distributed learning system includes at least two distributed nodes, and the at least two distributed nodes include a first distributed node and at least one second distributed node. This embodiment is described by using an example of a process of interaction between the first distributed node and any second distributed node in the at least one second distributed node. The following process of interaction between the first distributed node and each second distributed node may be performed simultaneously or separately. This is not limited in this application. The method may include the following steps:

S801: The first distributed node sends second indication information to the second distributed node adjacent to the first distributed node.

Correspondingly, the second distributed node receives the second indication information.

The first distributed node is a target node, and may be the first distributed node 101 in the distributed learning system shown in FIG. 1. The second distributed node may be the second distributed node 102 in the distributed learning system shown in FIG. 1. The first distributed node 101 is adjacent to the second distributed node 102, and the second distributed node 102 is also referred to as a neighboring node of the first distributed node.

For example, the first distributed node 101 may directly broadcast or unicast the second indication information, or the first distributed node 101 sends third indication information to the central node 103, to indicate the central node 103 to broadcast or unicast the second indication information. The second indication information indicates that the distributed learning system is in a machine learning inference mode. Broadcasting the second indication information may be adding an MLInference field to a system information block x (system information block, SIBx) (for example, SIB1). For example, when a value of the MI,Inference field is true (true), the MLInference field indicates that the distributed learning system is in the machine learning inference mode. Unicasting the second indication information may be unicasting interference configuration (Inference-Config) radio resource control (radio resource control, RRC) signaling, and the RRC signaling includes identifier information of an inference task, time-frequency resource pre-allocation information, and the like. The first distributed node 101/the central node 103 sends the RRC signaling to a node that is involved in a machine learning inference task.

S802: The first distributed node sends first indication information to the second distributed node.

Correspondingly, the second distributed node receives the first indication information.

The first distributed node 101 sends the first indication information to the second distributed node 102 to obtain data from the second distributed node 102 adjacent to the first distributed node 101. The first indication information indicates the second distributed node to send third data to the first distributed node. The first indication information may be carried in learning trigger information (learning trigger information, LTI) signaling. The first indication information includes at least one piece of the following information: resource scheduling information for transmitting the third data, inference task information, an amount of requested data, or a type of requested data. The resource scheduling information includes a resource allocation indication, an MCS, and the like. The inference task information includes task content, a task identifier, and the like. The amount of the requested data includes a data amount of the third data requested by the first distributed node to be sent by the second distributed node 102. The type of the requested data includes a data type of the third data requested by the first distributed node to be sent by the second distributed node 102. For example, the data type of the requested third data includes at least one of the following: a data sample acquired by the second distributed node 102 by using a data acquisition module of the second distributed node 102, an intermediate result of local inference, and a final result of local inference. The amount of the requested data may be in a unit of bits. Optionally, after obtaining samples of a plurality of pieces of raw data, intermediate results of a plurality of times of inference, and final results of the plurality of times of inference, the second distributed node 102 may perform sending separately each time, or may perform sending together.

Alternatively, S802 may alternatively be that the first distributed node sends the first indication information to the central node, so that the central node forwards the first indication information to the second distributed node. The central node receives the first indication information, and may forward the first indication information to the second distributed node 102 through unicasting, multicasting, or broadcasting.

S803: The second distributed node sends the third data to the first distributed node.

Correspondingly, the first distributed node receives the third data.

For example, after receiving the first indication information, the second distributed node 102 sends the third data to the first distributed node based on the first indication information. The third data includes at least one of the following: a data sample acquired by the second distributed node 102, an intermediate result of local inference, and a final result of local inference.

For example, the third data may be understood as initial data transmitted by the second distributed node 102 to the first distributed node.

S804: The first distributed node performs inference based on the second data and the third data by using a distributed learning model, and determines that an inference result is not robust.

The first distributed node performs inference by using the distributed learning model based on the second data and the third data. When it is determined that the inference result is not robust, S805 is performed; otherwise, the inference result is obtained. In other words, the first distributed node determines robustness of the inference result, and sends, to the second distributed node when the inference result is not robust, a communication mechanism indication determined based on a robustness requirement; or obtains and/or outputs the inference result when the inference result is robust.

That the first distributed node determines that the inference result is not robust includes any one of the following:

The first distributed node determines that a robustness probability is less than a specified target robustness probability, where the robustness probability is a probability that a quantity of transmitted erroneous bits in at least one piece of first data is less than a maximum quantity of erroneous bits, and the maximum quantity of erroneous bits is a maximum quantity of erroneous bits that are allowed to be transmitted if the robustness requirement of the distributed learning system is satisfied;

the first distributed node determines that a bit error rate of the at least one second distributed node is greater than a target bit error rate, where the target bit error rate is a maximum allowable bit error rate that satisfies the robustness requirement of the distributed learning system; or

the first distributed node determines that a maximum inference bias is greater than a specified inference bias, where the maximum inference bias is a maximum value among all possible inference biases.

In distributed inference, training data of each distributed node has a label $c_v$ in a training phase, and the labels may be continuous or discrete. A task of machine learning is to process data by using a machine learning model, so that an obtained processing result is the same as the data label $c_v$. Each distributed node locally stores a p-dimensional feature $x_v \in \{0,1\}^p$ related to the problem. The feature is usually stored in a form of a binary vector for subsequent transmission. If an original feature is continuous, a binary form of the feature can be obtained through quantification. For different machine learning tasks, physical meanings of $x_v$ and $c_v$ may be different. For example, for an image classification task, $x_v$ may be image data, and $c_v$ is a category corresponding to image content; for a communication system power control task, $x_v$ may be information such as a channel status, interference information, and a power upper limit, and $c_v$ is corresponding to a power control decision; and for a communication system link control problem, $x_v$ may be a node weight, interference information, a quality of service (quality of service, QoS) requirement, or the like, and $c_v$ is corresponding to a link activation indication. In machine learning, parameters in the machine learning model are adjusted through training to solve the following problem:

$$\min/\max F(\{c_v\}_{v \in V}, \{x_v\}_{v \in V}), \quad \text{s.t.} \quad G(\{c_v\}_{v \in V}, \{x_v\}_{v \in V})$$

$F(\cdot, \cdot)$ is a system optimization target (that needs to be maximized or minimized), and includes but is not limited to a system throughput, a system latency, system power consumption, and the like. $G(\cdot, \cdot)$ is a system optimization constraint condition, and includes but is not limited to a power limit, a QoS requirement, a fairness requirement, a channel resource constraint, and the like. The foregoing problem may be solved through distributed learning. To be specific, a relationship between $\{x_v\}_{v \in V}$ and $\{c_v\}_{v \in V}$ is fitted by using a distributed machine learning model (which may be implemented by using a neural network), where Visa set of vertexes in the model. After the model is trained, each distributed node locally stores the model. When a specific target distributed node v needs to infer a label corresponding to the target distributed node, the target distributed node sends a transmission request to a distributed node uGN(v) adjacent to the target distributed node, where N(v) is a set of distributed nodes adjacent to the target distributed node v. After receiving the transmission request, the adjacent distributed node sends a feature of the adjacent distributed node to the target distributed node. After receiving signals from all neighboring distributed nodes, the target distributed node v uses the local feature $x_v$ and a received feature $\hat{H}_v = \{\hat{x}_u\}_{u \in N(v)}$ of a neighboring node as inputs, and runs the locally stored machine learning model to obtain an inference result $\hat{c}_v$.

However, training of the machine learning model usually requires a large amount of time, computing power, and energy consumption overheads, and accuracy of a model output in a training phase is relatively low. Therefore, a more appropriate usage manner is to train a machine learning model off-line, deploy the model in an actual system, and then perform online inference. During online inference, the system can obtain only data required for an input of the machine learning model, but cannot obtain a label corresponding to the data.

The label of the data cannot be obtained in an inference phase. Therefore, robustness of model inference needs to be defined without a label.

To define robustness, a quantity of erroneous bits over a communication link between the target node v and a neighboring node u is denoted as $q_{vu}$, and a vector of a quantity of erroneous bits over communication links between the target node v and all neighboring nodes of the target node v is denoted as $q_v = [q_{vu_1}, q_{vu_2}, \dots, q_{vu_K}]$, where $u_1, u_2, \dots,$

$u_K \in N(v)$, and $N(v)$ represents a set of all the neighboring nodes of the target node v. It is assumed that $q_v$ is known, and a maximum inference bias $z(q_v, \hat{H}_v)$ is defined as:

$$z(q_v, \hat{H}_v) = \max_{\tilde{H}_v} \mathrm{Dis}(\hat{c}_v - NN(\tilde{H}_v))$$

$$\text{s.t.} \ \left\| \tilde{H}_v[u,:] - \hat{H}_v[u,:] \right\|_0 \le q_{vu}, \qquad \forall \, u \in N(v),$$

$$\tilde{H}_v[u,j] \in \{0,1\}, \qquad \forall \, u \in N(v), j = 1,2,\ldots,p$$

$\tilde{H}_v$ is a variable to be optimized, that is, a target function is maximized by adjusting a value of $\tilde{H}_v$; $q_v = [q_{vu}, u \in N(v)]$, where $q_{vu}$ represents a quantity of erroneous bits that may appear in a signal received by the target node v from the neighboring node u; and $\mathrm{Dis}(\cdot,\cdot)$ defines a distance between two inference results. The physical meaning of the foregoing definition is explained below. $\hat{H}_v[u,:]$ is an information vector (or matrix) of the neighboring node u in a neighboring node information matrix, with an element of 0/1 bit; and $\tilde{H}_v[u,:]$ is a vector (or matrix), that has same dimensions as $\hat{H}_v[u,:]$, also with an element of 0/1 bit. A first constraint condition indicates that a quantity of bits different between $\tilde{H}_v[u,:]$ and $\hat{H}_v[u,:]$ is less than $q_{vu}$, that is, $\tilde{H}_v[u,:]$ is obtained by introducing bit errors that are less than $q_{vu}$ based on $\hat{H}_v[u,:]$. Similarly, for another neighboring node, a corresponding $\tilde{H}_v[u,:]$ may also be constructed, and $\tilde{H}_v[u,:]$ of all neighboring nodes is combined to obtain $\tilde{H}_v$. An inference result $NN(\tilde{H}_v)$ is obtained by inputting $\tilde{H}_v$ into the machine learning model. $\mathrm{Dis}(\hat{c}_v - NN(\tilde{H}_v))$ represents calculating a difference between the inference result and an inference result (that is, $\hat{c}_v$) obtained by using $\hat{H}_v$ as an input of the learning model. The optimization problem is to traverse all possible $\tilde{H}_v$ to obtain a maximum difference between an inference result obtained by using all possible $\tilde{H}_v$ as an input of the machine learning model and $\hat{c}_v$. To be specific, a maximum bias of an inference result when the quantity of erroneous bits over communication links between all the neighboring nodes and the target node is within $q_v$ is defined by $z(q_v, \hat{H}_v)$. When the bias $z(q_v, \hat{H}_v)$ is less than a specified inference bias $D^{max}$, the distributed inference result $\hat{c}_v$ is considered robust within the error limit $q_v$. To be specific, if $z(q_v, \hat{H}_v)$ is less than the specified inference bias $D^{max}$, it indicates that no matter which bits are erroneous in an output process, the inference result is not affected. Therefore, in this case, inference is robust. It should be noted that in a robustness determining process herein, a real label corresponding to data input into the learning model does not need to be obtained, and the real label usually cannot be obtained in the inference phase. Therefore, the method in this embodiment has higher feasibility.

For example, it is assumed that no error occurs in transmission, and in this case, a real neighboring node information matrix is $H_v$.

A neighboring node information matrix that is actually received after channel transmission is $\hat{H}_v = [111]$, and

$$q_{vu} = 1.$$

In this case, there are following several possibilities for $\tilde{H}_v$:

$$\tilde{H}_v = [111];$$

$$\tilde{H}_v = [110];$$

$$\tilde{H}_v = [101];$$

and

$$\tilde{H}_v = [011].$$

Then, a difference between $\hat{c}_v$ and the inference result $NN(\tilde{H}_v)$ corresponding to the foregoing possible $\tilde{H}_v$ is

obtained, and a maximum value in all differences is used. If the maximum value in the differences is less than the specified inference bias D$^{max}$, it indicates that a bit error in a transmission process does not affect the inference result. In this case, inference is robust.

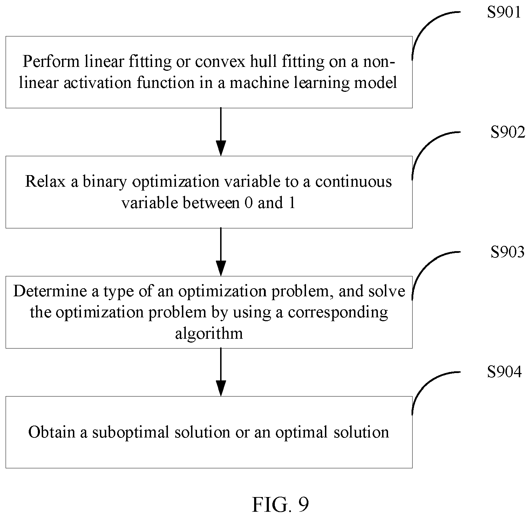

As the machine learning model may include a non-linear operation (for example, non-linear activation in a neural network), a procedure shown in FIG. 9 may be used to solve the foregoing problem to obtain z(q$_v$, $\hat{H}_v$). The procedure includes the following steps:

S901: Perform linear fitting or convex hull fitting on a non-linear activation function in a machine learning model.
S902: Relax a binary optimization variable to a continuous variable between 0 and 1.
S903: Determine a type of an optimization problem, and solve the optimization problem by using a corresponding algorithm.

Specifically, after the foregoing two steps of relaxation and fitting, the problem becomes a linear programming problem, a convex optimization problem, or another optimization problem, and is solved by using a corresponding common algorithm.

S904: Obtain a suboptimal solution or an optimal solution.

Two communication systems are mainly considered in this embodiment:

(1) Outage system: When quality (for example, a signal-noise ratio (SNR)) of a communication link is poor, a receiver-end fails in decoding and discards all bits in a data packet. In this case, an outage occurs; and
(2) Non-outage system: A bit over a communication link is erroneous at a specific probability (a bit error rate (bit error rate, BER)), and a BER over a communication link from a node u to a node v is calculated as follows:

$$\epsilon_{vu} = Q\left(\sqrt{\frac{2P_u h_{vu}}{\sigma_N^2}}\right)$$

Q(.) is a Q function, $P_u$ is a transmit power of the node u, $h_{vu}$ is a gain of a channel from the node u to the node v, and $\sigma_N^2$ is a noise power.

In the outage system, the target node v may calculate an SNR of a signal sent by the neighboring node u, and determine whether an outage occurs (whether the SNR is less than a demodulation threshold SNR). If an outage occurs, $q_{vu} = p$. That is, all $p$ bits are lost. If no outage occurs, $q_{vu} = 0$. Whether an outage occurs is determined for each neighboring node of the target node v, and the vector q$_v$ of the quantity of erroneous bits can be obtained, to calculate z(q$_v$, $\hat{H}_v$) and determine whether z(q$_v$, $\hat{H}_v$) is less than D$^{max}$. Therefore, in the outage system, the following method may be used to determine whether inference is robust:

A quantity of erroneous bits during transmission from each neighboring node to the target node is obtained, and the maximum inference bias $z(q'_v, \hat{H}_v)$ is calculated and compared with the specified inference bias D$^{max}$. When the target node v determines that the maximum inference bias is greater than the specified inference bias, it is determined that the inference result is not robust.

In the non-outage system, it is noted that z(q$_v$, $\hat{H}_v$) is calculated based on the assumption that q$_v$ is known. Therefore, on the contrary, with a given constraint condition for z(q$_v$, $\hat{H}_v$) (for example, less than a given threshold D$^{max}$), an allowable quantity of erroneous bits over a communication link may be calculated, that is, the following problem is solved:

$$q_v^* = \max_q q$$

$$\text{s.t. } q'_{vu} \leq q \qquad \forall\, u \in N(v),$$

$$z\left(q'_v, \hat{H}_v\right) < D^{max}$$

$q_v^*$ that is obtained is the quantity of erroneous bits allowed to be transmitted by the neighboring node of the target node v, that is, a maximum quantity of erroneous bits. In this case, a probability (a robustness probability) of quantities of erroneous bits transmitted by all the neighboring nodes of the target node v all less than the maximum quantity $q_v^*$ of erroneous bits is

$$p_v^{(r)} = P\big(q_{vu} \leq q_v^*, \forall u \in N(v)\big) = \prod_{u \in N(v)} \left[\sum_{i=0}^{q_v^*} \binom{p}{i} \epsilon_{vu}^i (1 - \epsilon_{vu})^{p-i}\right]$$

, where a

BER is $\varepsilon_{vu} = Q\left(\sqrt{\dfrac{2P_u h_{vu}}{\sigma_N^2}}\right)$ . The maximum quantity of erroneous bits is a maximum value in all possible first quantities $q_v'$ of erroneous bits, and the first quantity $q_v'$ of erroneous bits is a maximum quantity of erroneous bits, allowed when the inference bias $\left(z\big(q_v', \widehat{H}_v\big)\right)$ is less than a first maximum inference bias (D), during transmission of at least one piece of third data over the communication link. The inference bias is a quantity of bits different between a first inference result ($\hat{c}_v$) obtained by the first distributed device through inference by using the machine learning model based on the first data and at least one piece of second data and a second inference result ($NN(\tilde{H}_v)$) obtained by the first distributed device through inference by using the machine learning model based on the first data and at least one piece of fourth data. The at least one piece of fourth data is data with a quantity of bits that are different between the data and the at least one piece of second data less than or equal to the first quantity of erroneous bits, and the first maximum inference bias (D) is a positive integer less than or equal to the specified inference bias (D^max).

In this case, a requirement on the inference bias $z\big(q_v', \widehat{H}_v\big)$ may be translated into a requirement on the robustness probability $p_v^{(r)}$ . In other words, $p_v^{(r)}$ is required to be less than the target robustness probability $p_v^{(t)}$ , that is, $p_v^{(r)} < p_v^{(t)}$ .

Further, the BER may be required to be less than a target BER $\epsilon_v^*$ , where the target BER $\epsilon_v^*$ may be obtained by solving $\sqrt[|N(v)|]{p_v^{(t)}} = \sum_{i=0}^{q_v^*} \binom{p}{i} (\epsilon_v^*)^i (1 - \epsilon_v^*)^{p-i}$ . When a BER of the neighboring node of the target node v is greater than $\epsilon_v^*$ , inference is not robust.

Therefore, in the non-outage system, the following two methods may be used to determine whether inference is robust:

(1) The robustness probability $p_v^{(r)}$ is calculated based on the requirement $z\big(q_v', \widehat{H}_v\big) < D^{max}$ on the inference bias, and is compared with the specified target robustness probability $p_v^{(t)}$ . When the target node v determines that the robustness probability $p_v^{(r)}$ is less than the specified target robustness probability $p_v^{(t)}$ , the target node v determines that the inference result is not robust. The robustness probability is a probability of a quantity of transmitted erroneous bits in the third data is less than the maximum quantity of erroneous bits, and the maximum quantity of erroneous bits is a maximum quantity of erroneous bits that are allowed to be transmitted if the robustness requirement of the distributed learning system is satisfied.

(2) A BER during transmission from each neighboring node to the target node is calculated, and is compared with the target BER $\epsilon_v^*$ . When the target node v determines that the bit error rate of the neighboring node u is greater than the target BER, the target node v determines that the inference result is not robust. The target bit error rate is a maximum allowable bit error rate that satisfies the robustness requirement of the distributed learning system.

S805: The first distributed node sends communication mechanism indication information to the second distributed node.

Correspondingly, the second distributed node receives the communication mechanism indication information.

It can be learned from the foregoing description that, due to impact of a loss, fading, and noise of a wireless channel, the neighboring node information matrix $\hat{H}_v$ received by the distributed node v is usually not equal to an actual value $H_v$, and consequently, robustness of the obtained inference result $\hat{c}_v = NN(\hat{H}_v)$ is affected. Therefore, robustness of model inference can be improved by adjusting a communication mechanism if a relationship between the communication mechanism and robustness of model inference is established. Communication mechanism adjustment includes retransmission triggering, transmit power adjustment, MCS adjustment, and the like.

Therefore, when the first distributed node 101 determines that the inference result is not robust, the first distributed node 101 sends the communication mechanism indication information to the second distributed node 102. The communication mechanism indication information indicates a communication mechanism to be used by the second distributed node 102 to transmit data. The communication mechanism indication information is obtained based on a robustness requirement of the distributed learning system.

The first distributed node 101 may send the communication mechanism indication information to the second distributed node 102 in the following several implementations.

In an implementation, the first distributed node broadcasts (or multicasts) the communication mechanism indication information. Specifically, the first distributed node 101 determines that the inference result is not robust, calculates a required communication quality requirement, and broadcasts (or multicasts) learning quality information (learning quality information, LQI) to the second distributed node 102. Optionally, the second distributed node is a neighboring node that does not satisfy the communication quality requirement, and the LQI carries the communication quality requirement (for example, the target BER $\epsilon_v^*$ ). For example, the communication quality requirement includes a first bit error rate, where the first bit error rate is the maximum allowable bit error rate $\epsilon_v^*$ that satisfies the robustness requirement of the distributed learning system.

In another implementation, the first distributed node sends the communication mechanism indication information to the central node, so that the central node broadcasts the communication mechanism indication information.

In still another implementation, the first distributed node sends the communication mechanism indication information to the second distributed node. Specifically, the first distributed node 101 determines that the inference result is not robust, calculates, for the second distribution node that does not satisfy the communication quality requirement, a communication mechanism (for example, whether to perform retransmission, a required transmit power, and a required level of an MCS) that should be used by the second distributed node, and sends learning control information (learning control information, LCI) to the second distributed node that does not satisfy the communication quality requirement. The LCI carries retransmission indication information or communication mechanism adjustment information, so that the second distributed node adjusts a communication mechanism based on the LCI. For example, the retransmission indication information includes a data receiving failure indication and/or a transmission resource used for a next data transmission. For example, the communication mechanism adjustment information includes a suggested first transmit power and/or a suggested transmission resource used for a next data transmission, where the first transmit power is associated with the target bit error rate and a status of a first channel between the first distributed node and the second distributed node, or the first transmit power is associated with a first transmission rate of the second distributed node and a status of a second channel between the first distributed node and the second distributed node. For example, the communication mechanism adjustment information includes a suggested level of a first modulation and coding scheme and/or a suggested transmission resource used for a next data transmission, where the level of the first modulation and coding scheme is associated with a second transmission rate of the second distributed node and information about a third channel between the first distributed node and the second distributed node.

How to adjust a communication mechanism is described below in detail.

S806: The second distributed node sends the first data to the first distributed node.

Correspondingly, the first distributed node receives the first data from the second distributed node.

After receiving the communication mechanism indication information sent by the first distributed node 101, the second distributed node 102 transmits, to the first distributed node 101 based on the communication mechanism indication information, the first data acquired by the second distributed node 102. That is, the first data is transmitted by the second distributed node 102 based on the communication mechanism indication information. The first distributed node 101 receives the first data transmitted by the second distributed node 102. The first data includes at least one of the following: a data sample acquired by the second distributed node 102, an intermediate result of local inference, and a final result of local inference.

For example, the communication quality requirement includes the first bit error rate. The second distributed node 102 further calculates a required communication mechanism (for example, whether to perform retransmission, a required transmit power, and a required level of an MCS) based on the communication quality requirement, and adjusts the communication mechanism.

For example, if the communication mechanism indication information includes the retransmission indication information, where the retransmission indication information includes the data receiving failure indication and/or the transmission resource used for the next time of data transmission, the second distributed node 102 retransmits the first data to the first distributed node 101 on the transmission resource indicated by the retransmission indication information.

For example, the communication mechanism indication information includes the communication mechanism adjustment information, and specifically includes the suggested first transmit power and/or the suggested transmission resource used for the next time of data transmission. The second distributed node 102 determines a transmit power with reference to the first transmit power suggested by the first distributed node 101 and/or a transmit power suggested by another distributed node adjacent to the second distributed node 102. The second distributed node 102 retransmits the first data to the first distributed node 101 based on the determined transmit power on the transmission resource indicated by the communication mechanism indication information.

For example, the communication mechanism indication information includes the communication mechanism adjustment information, and specifically includes a suggested first level of an MCS and/or the suggested transmission resource used for a next data transmission. The second distributed node 102 determines a level of an MCS with reference to the first level of the MCS suggested by the first distributed node 101 and/or a level of an MCS suggested by another distributed node adjacent to the second distributed node 102. The second distributed node 102 retransmits the first data to the first distributed node 101 based on the determined level of the MCS on the transmission resource indicated by the communication mechanism indication information.

S807: The first distributed node performs inference again based on the second data of the first distributed node and the first data by using the distributed learning model.

After receiving the first data, the first distributed node inputs the second data of the first distributed node and the first data into the distributed learning model to perform inference again. As the second distributed node 102 transmits the first data based on the communication mechanism indication information, and the communication mechanism indication information is obtained based on the robustness requirement of the distributed learning system, robustness of distributed inference can be improved when inference is performed by using the distributed learning model based on the second data and the first data.

According to the communication method provided in this embodiment of this application, when the first distributed node performs inference by using the distributed learning model based on the second data and the third data, and determines that the inference result is not robust, the first distributed node sends the communication mechanism indication information to the second distributed node. The communication mechanism indication information is obtained based on the robustness requirement of the distributed learning system, and the second distributed node transmits the second data based on the communication mechanism indication information. The method improves robustness of distributed inference by using an efficient wireless transmission mechanism while comprehensively taking a wireless transmission error into consideration.

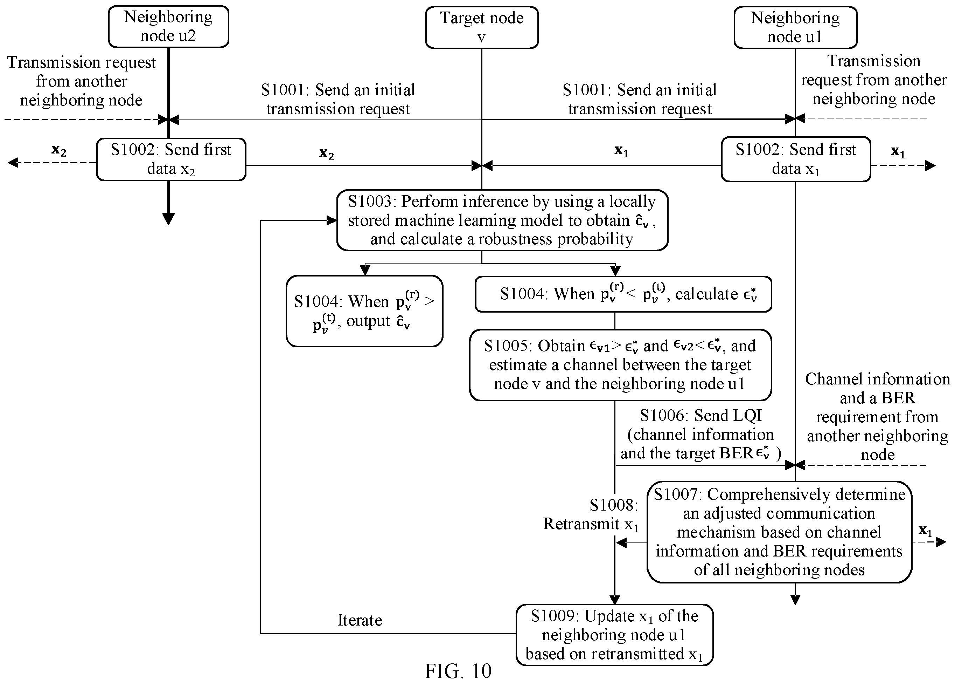

FIG. 10 is a schematic flowchart of another communication method according to an embodiment of this application. The method mainly relates to communication mechanism adjustment through broadcasting (or multicasting), and is generally applied to a non-outage communication system. The method may include the following steps:

S1001: A target node v sends an initial transmission request to a neighboring node u1 and a neighboring node u2.

This embodiment is described by using an example in which the target node v has two neighboring nodes (the neighboring node u1 and the neighboring node u2). Actually, the target node v may have one or more neighboring nodes.

Correspondingly, the neighboring node u1 receives the initial transmission request from the target node v. In addition, the neighboring node u1 may further receive a transmission request from another neighboring node. Similarly, the neighboring node u2 receives the initial transmission request from the target node v. In addition, the neighboring node u2 may further receive a transmission request from another neighboring node.

S1002: The neighboring node u1 sends first data $x_1$ to the target node v, and the neighboring node u2 sends first data $x_2$ to the target node v.

In this embodiment, that the neighboring node u1 sends the first data $x_1$ is used as an example. As the neighboring node u1 receives the transmission requests from the target node v and the another neighboring node, the neighboring node u1 may broadcast the first data $x_1$. In another embodiment, if the neighboring node u1 receives only the transmission request from the target node v, the neighboring node u1 may unicast the first data $x_1$ to the target node v. In another embodiment, if the neighboring node u1 receives the transmission requests from the target node v and the another neighboring node, the neighboring node u1 may separately send the first data $x_1$ to the target node v and the another neighboring node.

S1003: After receiving the first data $x_1$ sent by the neighboring node u1 and the first data $x_2$ sent by the neighboring node u2, the target node v performs inference by using a locally stored machine learning model, to obtain a first inference result ($\hat{c}_v$), and calculates a robustness probability $p_v^{(r)}$ .

For an inference and calculation process, refer to step S804 in the foregoing embodiment.

S1004: When the robustness probability $p_v^{(r)}$ is greater than or equal to a specified target robustness probability $p_v^{(t)}$ , the first inference result ($\hat{c}_v$) is output, and subsequent retransmission and update operations are not performed in a process of a current round of inference; or when the robustness probability $p_v^{(r)}$ is less than a specified target robustness probability $p_v^{(t)}$ , the target node v calculates a target bit error rate BER $\epsilon_v^*$ .

For a process of calculating the target BER $\epsilon_v^*$ , refer to step S804 in the foregoing embodiment.

In another embodiment, alternatively, when the robustness probability $p_v^{(r)}$ is greater than the specified target robustness probability $p_v^{(t)}$ , the first inference result ($\hat{c}_v$) is output, and subsequent retransmission and update operations are not performed in a process of a current round of inference; or when the robustness probability $p_v^{(r)}$ is less than or equal to the specified target robustness probability $p_v^{(t)}$ , the target node v calculates a target bit error rate BER $\epsilon_v^*$ .

That the first inference result is output means that an inference result corresponding to a maximum probability is output after a probability of an inference result category corresponding to an inference task is obtained. For example, for a communication system power control task, information such as a channel status, interference information, and a power upper limit is input, and the first inference result is corresponding to a power control decision.

S1005: It is assumed that a bit error rate of the neighboring node u1 $\epsilon_{v1} > \epsilon_v^*$ and a bit error rate of the neighboring node u2 $\epsilon_{v2} < \epsilon_v^*$ , and in this case, the target node v estimates a channel between the target node v and the neighboring node u1.

S1006: The target node v sends LQI to the neighboring node u1.

If BERs of a plurality of neighboring nodes of the target node v are greater than the target BER, in an implementation, the target node v may directly broadcast (or multicast) the LQI, where the LQI includes the target BER $\epsilon_v^*$ , and may further include information about the channel between the target node v and the neighboring node u1 that is estimated by the target node v; or in another implementation, the target node v may alternatively send the LQI to a central node, and then the central node broadcasts (or multicasts) the LQI to the neighboring nodes of the target node v. In the two implementations, the LQI signaling may be carried on a preconfigured transmission resource (for example, over a physical learning control channel (physical learning control channel, PLCCH)) for sending.

S1007: The neighboring node u1 receives the channel information and the target BER $\epsilon_v^*$ from the target node v, and may further receive channel information and a BER requirement sent by another neighboring node. The neighboring node u1 comprehensively determines an adjusted communication mechanism based on the received channel information and BER requirement corresponding to the neighboring node.

Specifically, the neighboring node u1 further calculates, based on the target BER, the required communication mechanism (for example, whether to perform retransmission, a required transmit power, and a required level of an MCS), and adjusts the communication mechanism.

S1008: The neighboring node u1 retransmits the first data $x_1$ to the target node v according to the determined and adjusted communication mechanism.

In addition, after adjusting the communication mechanism, the neighboring node u1 may further notify the target node v of the adjusted communication mechanism.

S1009: The target node v updates the first data of the neighboring node u1 based on the received retransmitted

first data $x_1$.

After receiving all first data that needs to be retransmitted, the target node v may combine first data that is transmitted over a plurality of times from a same neighboring node, for example, through maximal ratio combining (maximal ratio combing, MRC), to obtain an equivalent signal, and re-estimate a BER of the neighboring node.

The target node v performs inference again by using the locally stored machine learning model based on second data of the target node v and at least one piece of updated first data, to obtain a new inference result, and calculates a robustness probability of the result. The foregoing process is repeated until the target robustness probability is reached.

According to the communication method provided in this embodiment of this application, the target node or the central node broadcasts (or multicasts) the target BER, to improve communication efficiency. The method improves robustness of distributed inference by using an efficient wireless transmission mechanism while comprehensively taking a wireless transmission error into consideration.

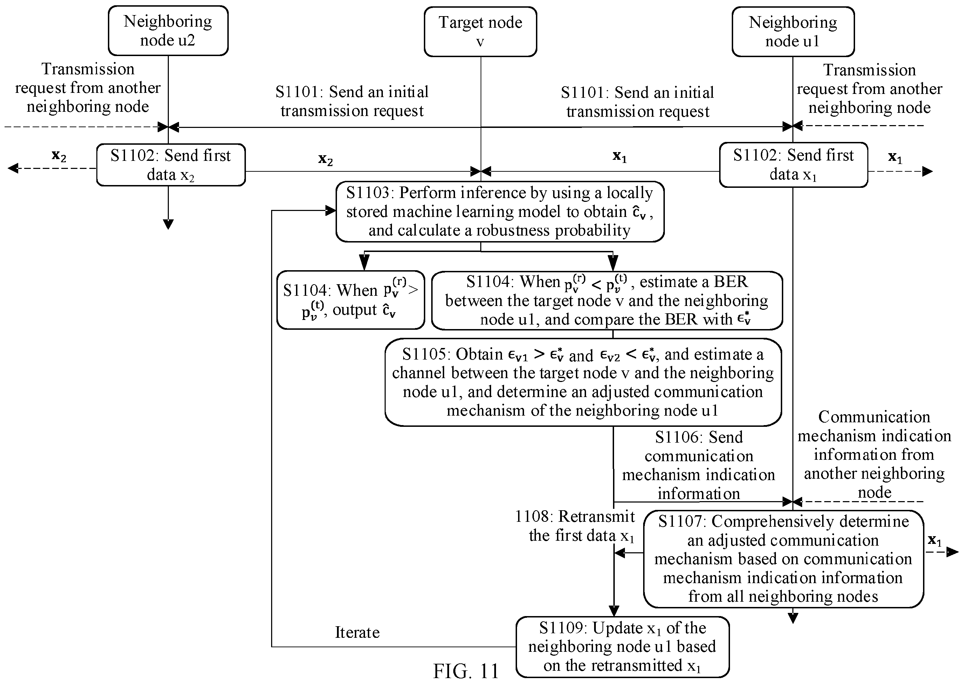

FIG. 11 is a schematic flowchart of another communication method according to an embodiment of this application, and mainly relates to point-to-point communication mechanism adjustment. The method may include the following steps:

S1101: A target node v sends an initial transmission request to a neighboring node u1 and a neighboring node u2.

For specific implementation of this step, refer to step S1001 in the foregoing embodiment.

S1102: The neighboring node u1 sends first data $x_1$ to the target node v, and the neighboring node u2 sends first data $x_2$ to the target node v.

For specific implementation of this step, refer to step S1002 in the foregoing embodiment.

S1103: After receiving the first data $x_1$ sent by the neighboring node u1 and the first data $x_2$ sent by the neighboring node u2, the target node v performs inference by using a locally stored machine learning model, to obtain a first inference result $(\hat{c}_v)$, and calculates a robustness probability $p_v^{(r)}$ .

For an inference and calculation process, refer to step S804 in the foregoing embodiment.

S1104: When the robustness probability $p_v^{(r)}$ is greater than or equal to a specified target robustness probability $p_v^{(t)}$ , the first inference result $(\hat{c}_v)$ is output, and subsequent retransmission and update operations are not performed in a process of a current round of inference; or when the robustness probability $p_v^{(r)}$ is less than a specified target robustness probability $p_v^{(t)}$ , the target node v estimates a BER between the target node v and the neighboring node u1, and compares the BER with the target bit error rate BER $\epsilon_v^*$ .

For a process of calculating the target BER $\epsilon_v^*$ , refer to step S804 in the foregoing embodiment.

In another embodiment, alternatively, when the robustness probability $p_v^{(r)}$ is greater than the specified target robustness probability $p_v^{(t)}$ , the first inference result $(\hat{c}_v)$ is output, and subsequent retransmission and update operations are not performed in a process of a current round of inference; or when the robustness probability $p_v^{(r)}$ is less than or equal to the specified target robustness probability $p_v^{(t)}$ , the target node v calculates a target bit error rate BER $\epsilon_v^*$ .

S1105: It is assumed that a bit error rate of the neighboring node u1 $\epsilon_{v1} > \epsilon_v^*$ and a bit error rate of the neighboring node u2 $\epsilon_{v2} < \epsilon_v^*$ , and in this case, the target node v estimates a channel between the target node v and the neighboring node u1, and determines an adjusted communication mechanism of the neighboring node u1.

S1106: The target node v sends communication mechanism indication information to the neighboring node u1.

Specifically, the target node v may send, point-to-point, the communication mechanism indication information to a neighboring node that does not satisfy a communication quality requirement; or the target node v may send the communication mechanism indication information to a central node, and the central node sends, point-to-point, the communication mechanism indication information to a neighboring node that does not satisfy a communication quality requirement. Signaling for sending the communication mechanism indication information changes according to different adjusted communication mechanisms indicated by the communication mechanism indication information.

For example, when the neighboring node u1 needs to be indicated for retransmission, the target node v sends LCI including an inference-non-acknowledgment (R-NACK) to the neighboring node u1. The R-NACK indicates that an inference result is not robust, and the LCI including the R-NACK may further include a transmission resource used for a next data transmission. In this case, the neighboring node u1 retransmits the first data to the target node v on the transmission resource indicated by the LCI. In addition, when the target node v receives the first data $x_2$ initially sent by the neighboring node u2, and the bit error rate of the neighboring node u2 $\epsilon_{v2} < \epsilon_v^*$, the target node v may alternatively send LCI including an inference-acknowledgment (R-ACK) to the neighboring node u2.

The R-ACK/R-NACK may be a newly defined retransmission control signaling field. When the target node v receives third data from a neighboring node and obtains a robust inference result through robustness determining, the target node v may send the LCI including the R-ACK to the corresponding neighboring node. Otherwise, when the inference result is not robust, the target node v sends the LCI including the R-NACK to trigger the neighboring node to retransmit data.

For example, when the neighboring node u1 needs to be indicated for power adjustment, the target node v sends LCI to the neighboring node u1. The LCI includes a suggested first transmit power and/or a suggested transmission resource used for a next data transmission. The neighboring node u1 determines a transmit power with reference to the first transmit power suggested by the target node v and/or a transmit power suggested by another distributed node adjacent to the neighboring node u1. The neighboring node u1 retransmits the first data to the target node v based on the determined transmit power on the transmission resource indicated by the communication mechanism indication information.

For example, when the neighboring node u1 needs to be indicated for MCS level adjustment, the target node v sends LCI to the neighboring node u1. The LCI includes a suggested first level of an MCS and/or a suggested transmission resource used for a next data transmission. The neighboring node u1 determines a level of an MCS with reference to the first level of the MCS suggested by the target node v and/or a level of an MCS suggested by another distributed node adjacent to the neighboring node u1. The neighboring node u1 retransmits the first data to the target node v based on the determined level of the MCS on the transmission resource indicated by the communication mechanism indication information.

The LCI may be carried over a PLCCH for sending.

S1107: The neighboring node u1 receives the communication mechanism indication information from the target node v, and may further receive communication mechanism indication information from another neighboring node. The neighboring node u1 comprehensively determines an adjusted communication mechanism based on communication mechanism indication information from one or more neighboring nodes.

S1108: The neighboring node u1 retransmits the first data $x_1$ to the target node v according to the determined and adjusted communication mechanism.

In addition, after adjusting the communication mechanism, the neighboring node u1 may further notify the target node v of the adjusted communication mechanism.

51109: The target node v updates the first data of the neighboring node u1 based on the received retransmitted first data $x_1$.

For specific implementation of this step, refer to step S1009 in the foregoing embodiment. The foregoing process is repeated until the target robustness probability is reached. According to the communication method provided in this embodiment of this application, through point-to-point, the target node determines the adjusted communication mechanism of the neighboring node that does not satisfy the communication quality requirement, and sends the communication mechanism indication information to the neighboring node, to improve communication efficiency and reduce workload of the neighboring node. The method improves robustness of distributed inference by using an efficient wireless transmission mechanism while comprehensively taking a wireless transmission error into consideration.

A specific communication mechanism adjustment method is described below in detail by using point-to-point adjustment as an example. Actually, for a non-outage communication system, adjustment may alternatively be performed through broadcasting (or multicasting).

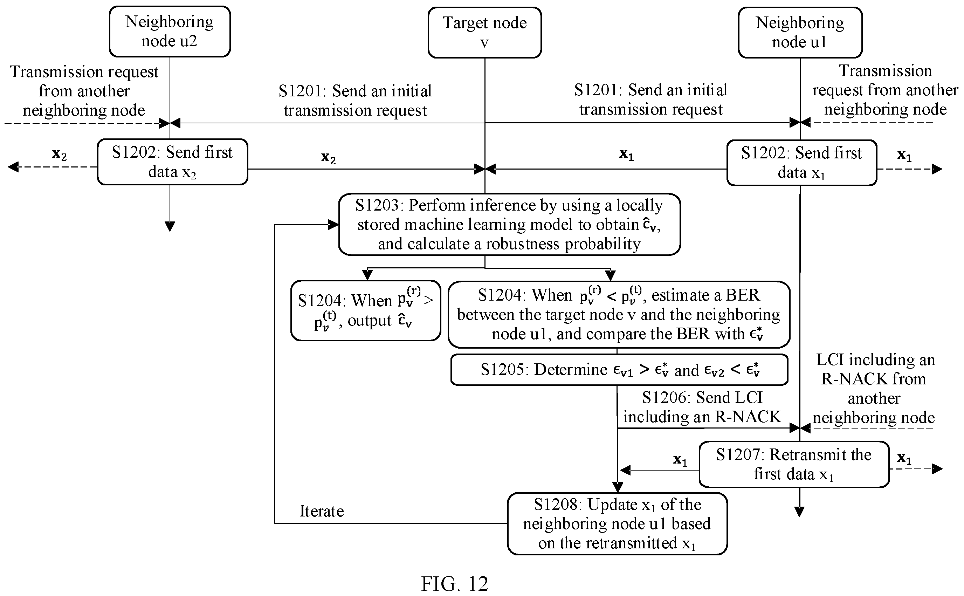

FIG. 12 is a schematic flowchart of another communication method according to an embodiment of this application. The method is applied to a retransmission scenario of a non-outage system. The method may include the following steps:

S1201: A target node v sends an initial transmission request to a neighboring node u1 and a neighboring node u2.

For specific implementation of this step, refer to step S1001 in the foregoing embodiment.

S1202: The neighboring node u1 sends first data $x_1$ to the target node v, and the neighboring node u2 sends first data $x_2$ to the target node v.

For specific implementation of this step, refer to step S1002 in the foregoing embodiment.

S1203: After receiving the first data $x_1$ sent by the neighboring node u1 and the first data $x_2$ sent by the neighboring node u2, the target node v performs inference by using a locally stored machine learning model, to obtain a first inference result $(\hat{c}_v)$, and calculates a robustness probability $p_v^{(r)}$ .

For an inference and calculation process, refer to step S804 in the foregoing embodiment.

S1204: When the robustness probability $p_v^{(r)}$ is greater than or equal to a specified target robustness probability $p_v^{(t)}$ , the first inference result $(\hat{c}_v)$ is output, and subsequent retransmission and update operations are not performed in a process of a current round of inference; or when the robustness probability $p_v^{(r)}$ is less than a specified target robustness probability $p_v^{(t)}$ , the target node v estimates a BER between the target node v and the neighboring node u1, and compares the BER with the target bit error rate BER $\epsilon_v^*$ .

For a process of calculating the target BER $\epsilon_v^*$ , refer to step S804 in the foregoing embodiment.

In another embodiment, alternatively, when the robustness probability $p_v^{(r)}$ is greater than the specified target robustness probability $p_v^{(t)}$ , the first inference result $(\hat{c}_v)$ is output, and subsequent retransmission and update operations are not performed in a process of a current round of inference; or when the robustness probability $p_v^{(r)}$ is less than or equal to the specified target robustness probability $p_v^{(t)}$ , the target node v calculates a target bit error rate BER $\epsilon_v^*$ .

S1205: The target node v determines that a bit error rate of the neighboring node u1 $\epsilon_{v1} > \epsilon_v^*$ and a bit error rate of the neighboring node u2 $\epsilon_{v2} < \epsilon_v^*$ .

S1206: The target node v sends LCI including an R-NACK to the neighboring node u1.

When the neighboring node u1 needs to be indicated for retransmission, the target node v sends LCI including an inference-non-acknowledgment (R-NACK) to the neighboring node u1. The R-NACK indicates that an inference result is not robust, and the LCI including the R-NACK may further include a transmission resource used for a next data transmission. In this case, the neighboring node u1 retransmits the first data to the target node v on the transmission resource indicated by the LCI. In addition, when the target node v receives the first data $x_2$ initially sent by the neighboring node u2, and the bit error rate of the neighboring node u2 $\epsilon_{v2} < \epsilon_v^*$ , the target node v may alternatively send LCI including an inference-acknowledgment (R-ACK) to the neighboring node u2.

The LCI including the R-NACK/R-ACK may be carried over a PLCCH for transmission.

The neighboring node u1 receives the LCI including the R-NACK from the target node v.

In addition, a plurality of target nodes in the system may synchronously perform inference. Therefore, the neighboring node u1 may receive LCI from a plurality of neighboring nodes.

S1207: The neighboring node u1 retransmits the first data $x_1$ to the target node v.

In a possible implementation, the neighboring node may broadcast the first data $x_1$. For example, if the neighboring node u1 receives LCI from a plurality of neighboring nodes, as first data that needs to be transmitted by the neighboring node u1 to different target nodes is the same, and a transmit power and an MCS are determined, the neighboring node u1 may transmit the first data $x_1$ of the neighboring node u1 to the neighboring nodes through broadcasting (or multicasting).

In a possible implementation, the neighboring node may unicast the first data $x_1$. If the neighboring node u1 receives LCI including an R-NACK from only one target node, the neighboring node u1 may transmit the first data $x_1$ of the neighboring node u1 to the target node through unicasting.

S1208: The target node v updates the first data of the neighboring node u 1 based on the received retransmitted first data $x_1$.

For specific implementation of this step, refer to step S1009 in the foregoing embodiment. According to the retransmission mechanism provided in this embodiment, an appropriate retransmission mechanism and an appropriate stop mechanism are formulated to achieve robustness of a distributed inference result, so that a quasi-robust distributed inference result can be obtained with a small quantity of times of retransmission. In an existing retransmission mechanism, reliability is used as a criterion for determining whether to perform retransmission, and retransmission is stopped only after signals of all neighboring nodes are transmitted correctly. Distributed learning has a specific tolerance to transmission errors. Therefore, in this embodiment, a new retransmission determining criterion and a stop mechanism are formulated, to avoid a waste of communication resources and reduce a latency for implementing robust inference.

According to the communication method provided in this embodiment of this application, to achieve the goal of robustness of distributed inference, a neighboring node that does not satisfy a communication requirement is indicated to retransmit the first data, thereby improving robustness of distributed inference.

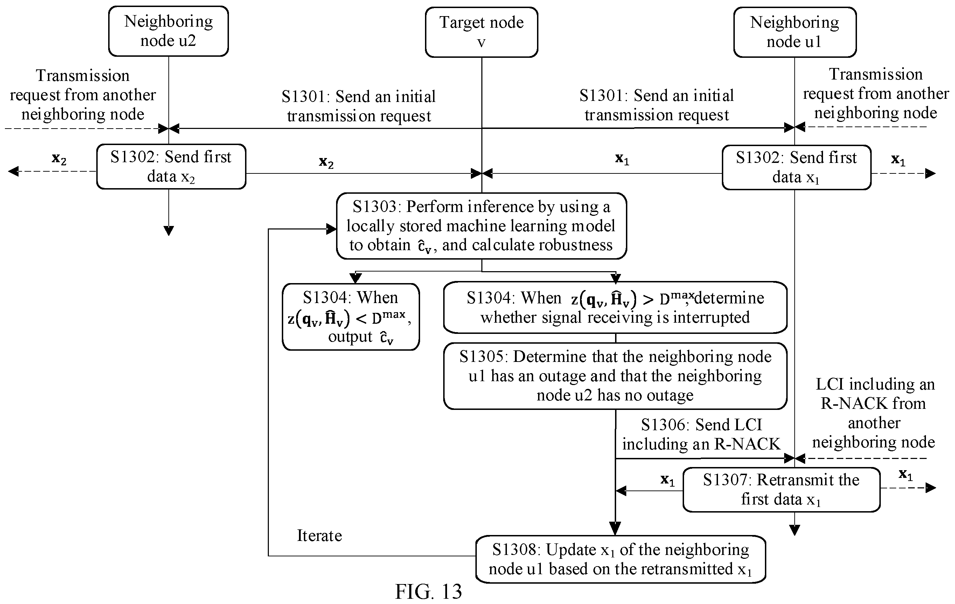

FIG. 13 is a schematic flowchart of another communication method according to an embodiment of this application. The method is applied to a retransmission scenario of an outage system. The method may include the following steps:

S1301: A target node v sends an initial transmission request to a neighboring node u1 and a neighboring node u2.

For specific implementation of this step, refer to step S1001 in the foregoing embodiment.

S1302: The neighboring node u1 sends first data $x_1$ to the target node v, and the neighboring node u2 sends first data $x_2$ to the target node v.

For specific implementation of this step, refer to step S1002 in the foregoing embodiment.

S1303: After receiving the first data $x_1$ sent by the neighboring node u1 and the first data $x_2$ sent by the neighboring node u2, the target node v performs inference by using a locally stored machine learning model, to obtain a first inference result $(\hat{c}_v)$, and calculates robustness.

For an inference and calculation process, refer to step S804 in the foregoing embodiment.

S1304: When a maximum inference bias $z(q_v, \hat{H}_v)$ is less than a specified inference bias $D^{max}$, the first inference result $(\hat{c}_v)$ is output, and subsequent retransmission and update operations are not performed in a process of a current round of inference; or when $z(q_v, \hat{H}_v)$ is greater than the specified inference bias $D^{max}$, the target node v determines whether signal receiving is interrupted.

S1305: It is assumed that the target node v determines that the neighboring node u1 has an outage and that the neighboring node u2 has no outage.

S1306: The target node v sends LCI including an R-NACK to the neighboring node u1.

When the neighboring node u1 needs to be indicated for retransmission, the target node v sends LCI including an inference-non-acknowledgment (R-NACK) to the neighboring node u1. The R-NACK indicates that an inference result is not robust, and the LCI including the R-NACK may further include a transmission resource used for a next data transmission. In this case, the neighboring node u1 retransmits the first data to the target node v on the transmission resource indicated by the LCI. In addition, when the target node v receives the first data $x_2$ initially sent by the neighboring node u2, and the bit error rate of the neighboring node u2 $\epsilon_{v2} < \epsilon_v^*$, the target node v may alternatively send LCI including an inference-acknowledgment (R-ACK) to the neighboring node u2.

The LCI including the R-NACK/R-ACK may be carried over a PLCCH for transmission.

The neighboring node u1 receives the LCI including the R-NACK from the target node v.

In addition, a plurality of target nodes in the system may synchronously perform label inference. Therefore, the neighboring node u1 may receive LCI from a plurality of neighboring nodes.

S1307: The neighboring node u1 retransmits the first data $x_1$ to the target node v.

If the neighboring node u1 receives LCI including an R-NACK from a plurality of neighboring as first data that needs to be transmitted by the neighboring node u1 to different target nodes is the same, and a transmit power and an MCS are determined, the neighboring node u1 may transmit the first data $x_1$ of the neighboring node u1 to the neighboring nodes through broadcasting (or multicasting).

If the neighboring node u1 receives LCI including an R-NACK from only one target node, the neighboring node u1 may transmit the first data $x_1$ of the neighboring node u1 to the target node through unicasting.

S1308: The target node v updates the first data of the neighboring node u1 based on the received retransmitted first data $x_1$.

For specific implementation of this step, refer to step S1009 in the foregoing embodiment. The foregoing process is repeated until a robust inference result is obtained, that is, until $z(q_v, \hat{H}_v)$ is less than the specified inference bias $D^{max}$.

According to the retransmission mechanism provided in this embodiment, an appropriate retransmission mechanism and an appropriate stop mechanism are formulated to achieve robustness of a distributed inference result, so that a quasi-robust distributed inference result can be obtained with a small quantity of times of retransmission. In an existing retransmission mechanism, reliability is used as a criterion for determining whether to perform retransmission, and retransmission is stopped only after signals of all neighboring nodes are transmitted correctly. Distributed learning has a specific tolerance to transmission errors. Therefore, in this embodiment, a new retransmission determining criterion and a stop mechanism are formulated, to avoid a waste of communication resources and reduce a latency for implementing robust inference.

According to the communication method provided in this embodiment of this application, to achieve the goal of robustness of distributed inference, a neighboring node that does not satisfy a communication requirement is indicated to retransmit the first data, thereby improving robustness of distributed inference.

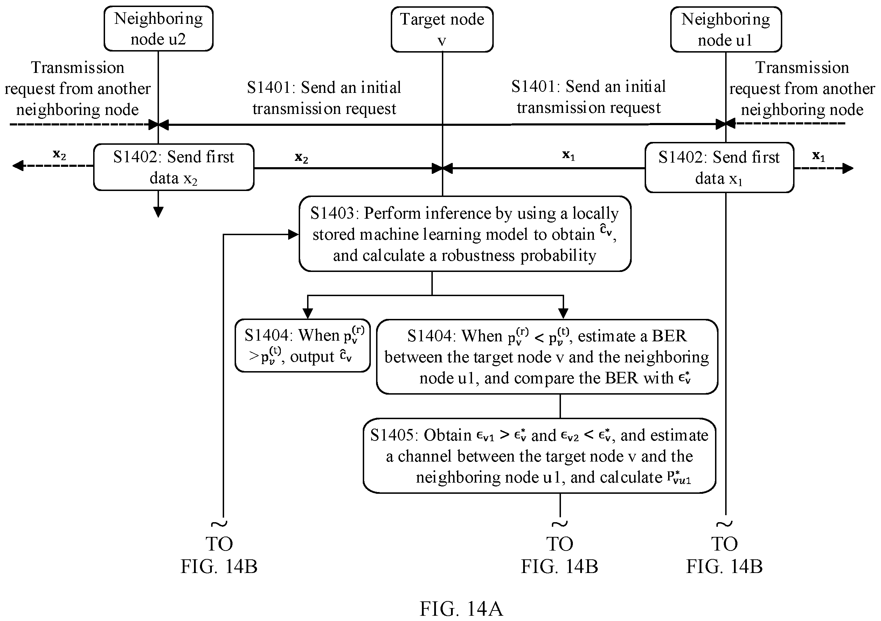

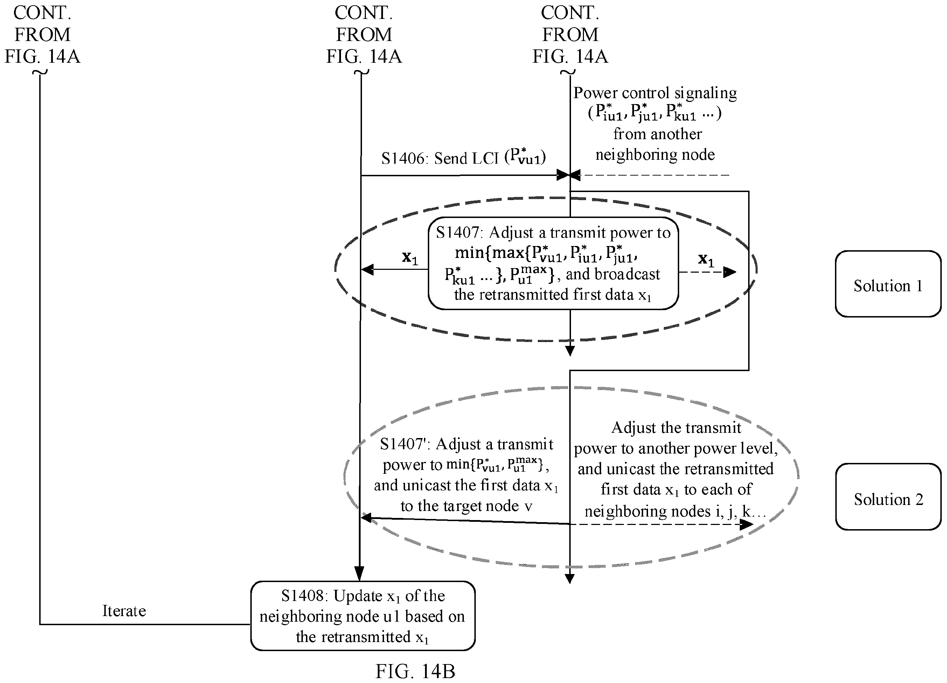

FIG. 14A and FIG. 14B are a schematic flowchart of another communication method according to an embodiment of this application. The method is applied to a power control scenario of a non-outage system. The method may include the following steps:

S1401: A target node v sends an initial transmission request to a neighboring node u1 and a neighboring node u2.

For specific implementation of this step, refer to step S1001 in the foregoing embodiment.

S1402: The neighboring node u1 sends first data $x_1$ to the target node v, and the neighboring node u2 sends first data $x_2$ to the target node v.

For specific implementation of this step, refer to step S1002 in the foregoing embodiment.

S1403: After receiving the first data $x_1$ sent by the neighboring node u1 and the first data $x_2$ sent by the neighboring node u2, the target node v performs inference by using a locally stored machine learning model, to obtain a first inference result $(\hat{c}_v)$, and calculates a robustness probability $p_v^{(r)}$ .

For an inference and calculation process, refer to step S804 in the foregoing embodiment.

S1404: When the robustness probability $p_v^{(r)}$ is greater than or equal to a specified target robustness probability $p_v^{(t)}$ , the first inference result $(\hat{c}_v)$ is output, and subsequent transmit power adjustment, retransmission and update operations are not performed in a process of a current round of inference; or when the robustness probability $p_v^{(r)}$ is less than a specified target robustness probability $p_v^{(t)}$ , the target node v estimates a BER between the target node v and the neighboring node u1, and compares the BER with the target bit error rate BER $\epsilon_v^*$ .

For a process of calculating the target BER $\epsilon_v^*$ , refer to step S804 in the foregoing embodiment.

In another embodiment, alternatively, when the robustness probability $p_v^{(r)}$ is greater than the specified target robustness probability $p_v^{(t)}$ , the first inference result $(\hat{c}_v)$ is output, and subsequent transmit power adjustment, retransmission, and update operations are not performed in a process of a current round of inference; or when the robustness probability $p_v^{(r)}$ is less than or equal to the specified target robustness probability $p_v^{(t)}$ , the target node v calculates a target bit error rate BER $\epsilon_v^*$ .

S1405: The target node v determines that a bit error rate of the neighboring node u1 $\epsilon_{v1} > \epsilon_v^*$ and a bit error rate of the neighboring node u2 $\epsilon_{v2} < \epsilon_v^*$ . The target node v estimates a channel between the target node v and the neighboring node u1, and calculates a suggested first transmit power $P_{vu1}^*$ .

Specifically, the target node v estimates a state $h_{vu1}$ of the channel from the neighboring node u1 to be adjusted to the target node v, and then obtains, based on $\epsilon_v^* = Q\left(\sqrt{\frac{2P_{vu1}^* h_{vu1}}{\sigma_N^2}}\right)$ , a power level $P_{vu1}^*$ to which the

neighboring node u1 should be adjusted.

S1406: The target node v sends LCI to the neighboring node u1, and correspondingly, the neighboring node u1 receives the LCI sent by the target node v.

When the neighboring node u1 needs to be indicated for power adjustment, the target node v sends LCI to the neighboring node u1. The LCI includes the suggested first transmit power and/or a suggested transmission resource used for a next data transmission.

The neighboring node u1 receives the LCI from the target node v.

In addition, a plurality of target nodes in the system may synchronously perform label inference. Therefore, the neighboring node u1 may receive LCI from a plurality of neighboring nodes. The LCI from the plurality of neighboring nodes separately includes transmit powers $P_{iu1}^*$, $P_{ju1}^*$, $P_{ku1}^*$, and the like suggested by the plurality of neighboring nodes.

The neighboring node u1 adjusts a transmit power of the neighboring node u1 based on the received first transmit power $P_{vu1}^*$ and/or a transmit power suggested by another neighboring node.

After the neighboring node u1 receives the first transmit power $P_{vu1}^*$ sent by the target node v and/or the transmit power suggested by the another neighboring node, there are two adjustment solutions for the neighboring node u1, that is, S1407 and S1407'.

S1407: The neighboring node u1 adjusts a transmit power to $\min\{\max\{P_{vu1}^*, P_{iu1}^*, P_{ju1}^*, P_{ku1}^* \ldots\}, P_{u1}^{\max}\}$, where $P_{u1}^{\max}$ is a maximum transmit power of the neighboring node u1; and broadcasts the first data $x_1$ of the neighboring node u1 to the another neighboring node. The neighboring node u1 comprehensively takes a received transmit power suggested by one or more neighboring nodes into consideration, and adjusts the transmit power, to improve communication reliability and ensure inference performance of the target node v.

S1407': The neighboring node u1 adjusts a transmit power to $\min\{P_{vu1}^*, P_{u1}^{\max}\}$, and unicasts the first data $x_1$ of the neighboring node u1 to the target node v.

Similarly, for another neighboring node, the neighboring node u1 adjusts a power based on a requirement of the another neighboring node, and then unicasts the first data or the encoded first data of the neighboring node u1 to the corresponding neighboring node.

The neighboring node u1 adjusts a transmit power based on a transmit power suggested by each target node, so that the transmit power may be adjusted in a targeted manner, thereby avoiding a waste of energy.

S1408: The target node v updates the first data of the neighboring node u1 based on the received retransmitted first data $x_1$.

For specific implementation of this step, refer to step S1009 in the foregoing embodiment. The foregoing process is repeated until the target robustness probability is reached.

According to the power adjustment and control mechanism provided in this embodiment, a new power adjustment criterion and a new calculation manner are formulated, to avoid a highly complex mathematical optimization process, and an objective of ensuring robustness of distributed inference through efficient power adjustment is achieved. An existing power control mechanism usually aims to maximize a system throughput, and implements control through complex mathematical optimization or in a manner based on reinforcement learning. For distributed inference in a wireless network, an objective of power control is to ensure robustness and timeliness of an inference result. Therefore, in this embodiment, a new power adjustment criterion and a new calculation manner are formulated, to implement fast and efficient power control, reduce a latency for implementing accurate and robust inference, and avoid a waste of resources.

According to the communication method provided in this embodiment of this application, to achieve the goal of robustness of distributed inference, a neighboring node that does not satisfy a communication requirement is indicated to adjust a transmit power, thereby improving robustness of distributed inference.

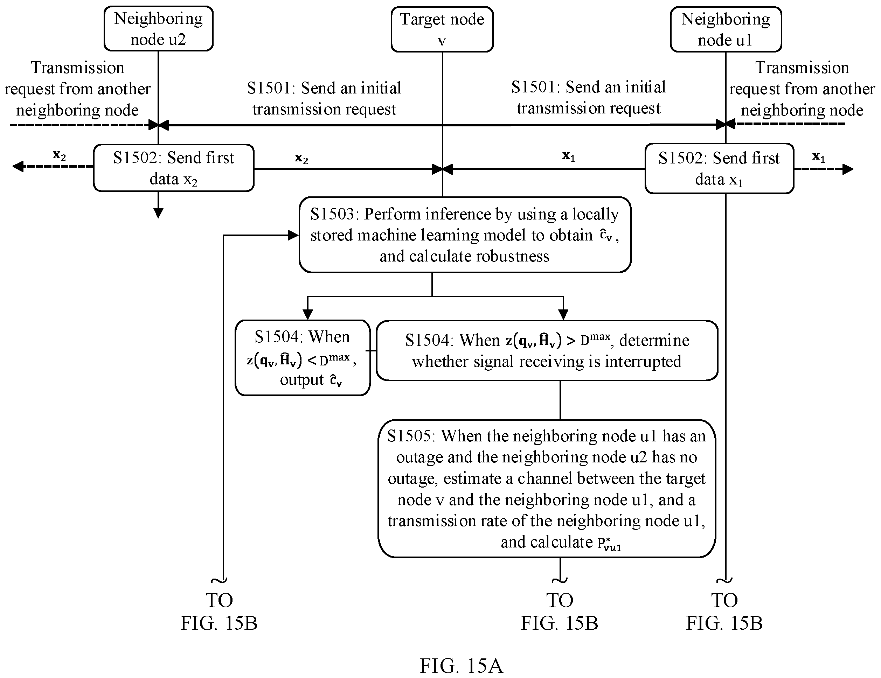

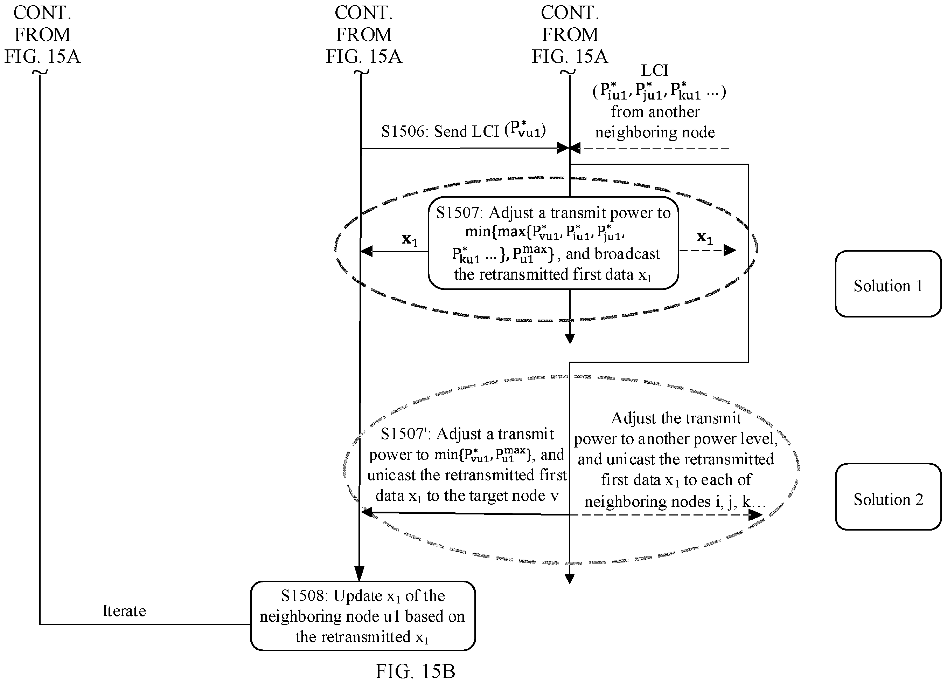

FIG. 15A and FIG. 15B are a schematic flowchart of another communication method according to an embodiment of this application. The method is applied to a power control scenario of an outage system. The method may include the following steps:

S1501: A target node v sends an initial transmission request to a neighboring node u1 and a neighboring node u2.

For specific implementation of this step, refer to step S1001 in the foregoing embodiment.

S1502: The neighboring node u1 sends first data $x_1$ to the target node v, and the neighboring node u2 sends

first data $x_2$ to the target node v.

For specific implementation of this step, refer to step S1002 in the foregoing embodiment.

S1503: After receiving the first data $x_1$ sent by the neighboring node u1 and the first data $x_2$ sent by the neighboring node u2, the target node v performs inference by using a locally stored machine learning model, to obtain a first inference result ($\hat{c}_v$), and calculates robustness.

For an inference and calculation process, refer to step S804 in the foregoing embodiment.

S1504: When $z(q_v, \hat{H}_v)$ is less than a specified inference bias $D^{max}$, the first inference result ($\hat{c}_v$) is output, and subsequent transmit power adjustment, retransmission, and update operations are not performed in a process of a current round of inference; or when $z(q_v, \hat{H}_v)$ is greater than the specified inference bias $D^{max}$, the target node v determines whether signal receiving is interrupted.

In another embodiment, alternatively, when $z(q_v, \hat{H}_v)$ is less than a specified inference bias $D^{max}$, the first inference result ($\hat{c}_v$) is output, and subsequent transmit power adjustment, retransmission, and update operations are not performed in a process of a current round of inference; or when $z(q_v, \hat{H}_v)$ is greater than or equal to the specified inference bias $D^{max}$, the target node v determines whether signal receiving is interrupted.

S1505: The target node v determines that the neighboring node u1 has an outage and that the neighboring node u2 has no outage. A channel between the target node v and the neighboring node u1, and a transmission rate of the neighboring node u1 are estimated, and a suggested first transmit power $P^*_{vu1}$ is calculated.

When another condition remains unchanged, a larger first transmit power indicates a higher transmission rate; and on the contrary, a smaller first transmit power indicates a lower transmission rate.

S1506: The target node v sends LCI to the neighboring node u1, and correspondingly, the neighboring node u1 receives the LCI sent by the target node v.

When the neighboring node u1 needs to be indicated for power adjustment, the target node v sends LCI to the neighboring node u1. The LCI includes the suggested first transmit power and/or a suggested transmission resource used for a next data transmission.

The neighboring node u1 receives the LCI from the target node v.

In addition, a plurality of target nodes in the system may synchronously perform label inference. Therefore, the neighboring node u1 may receive LCI from a plurality of neighboring nodes. The LCI from the plurality of neighboring nodes separately includes transmit powers $P^*_{iu1}$, $P^*_{ju1}$, $P^*_{ku1}$, and the like suggested by the plurality of neighboring nodes.

After the neighboring node u1 receives the first transmit power $P^*_{vu1}$ sent by the target node v and/or the transmit power suggested by the another neighboring node, there are two adjustment solutions for the neighboring node u1, that is, S1507 and S1507'.

S1507: The neighboring node u1 adjusts a transmit power to $\min\{\max\{P^*_{vu1}, P^*_{iu1}, P^*_{ju1}, P^*_{ku1} ...\}, P^{max}_{u1}\}$, where $P^{max}_{u1}$ is a maximum transmit power of the neighboring node u1; and broadcasts the first data $x_1$ of the neighboring node u1 to all neighboring nodes. The neighboring node u1 comprehensively takes a received transmit power suggested by one or more neighboring nodes into consideration, and adjusts the transmit power, to improve communication reliability and ensure inference performance of the target node v.

S1507': The neighboring node u1 adjusts a transmit power to $\min\{P^*_{vu1}, P^{max}_{u1}\}$, and unicasts the first data $x_1$ of the neighboring node u1 to the target node v.

Similarly, for another neighboring node, the neighboring node u1 adjusts a power based on a requirement of the another neighboring node, and then unicasts the first data or the encoded first data of the neighboring node u1 to the corresponding neighboring node.

The neighboring node u1 adjusts a transmit power based on a transmit power suggested by each target node, so that the transmit power may be adjusted in a targeted manner, thereby avoiding a waste of energy.

S1508: The target node v updates the first data of the neighboring node u1 based on the received retransmitted first data $x_1$.

For specific implementation of this step, refer to step S1009 in the foregoing embodiment. The foregoing process is repeated until a robust inference result is obtained, that is, until $z(q_v, \hat{H}_v)$ is less than the specified inference bias $D^{max}$.

According to the power adjustment and control mechanism provided in this embodiment, a new power adjustment criterion and a new calculation manner are formulated, to avoid a highly complex mathematical optimization process, and an objective of ensuring robustness of distributed inference through efficient power adjustment is achieved. An existing power control mechanism usually aims to maximize a system throughput, and implements control through complex mathematical optimization or in a manner based on reinforcement learning. For distributed inference in a wireless network, an objective of power control is to ensure robustness and timeliness of an inference result. Therefore, in this embodiment, a new power adjustment criterion and a new calculation manner are formulated, to implement fast and efficient power control, reduce a latency for implementing accurate and robust inference, and avoid a waste of resources.

According to the communication method provided in this embodiment of this application, when there is a wireless transmission error, a neighboring node that does not satisfy a communication requirement is indicated to adjust a transmit power, thereby improving robustness of distributed inference.

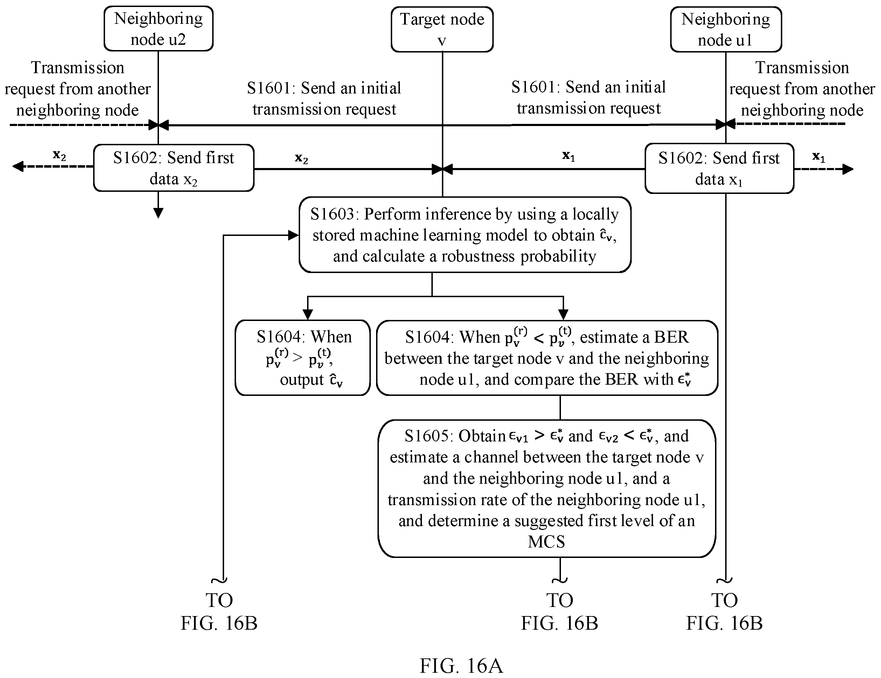

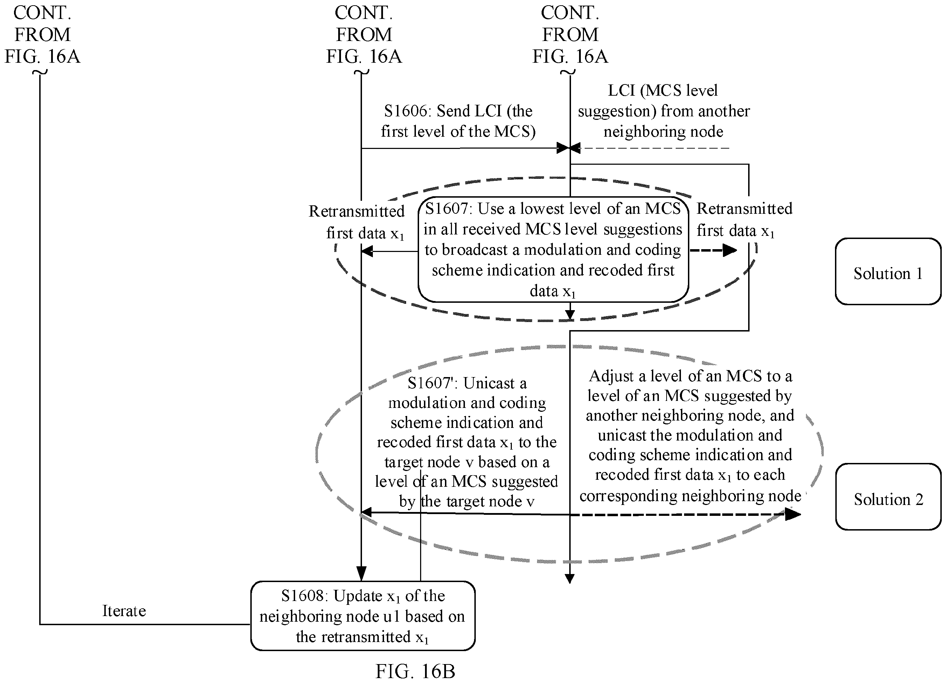

FIG. 16A and FIG. 16B are a schematic flowchart of another communication method according to an embodiment of this application. The method is applied to an MCS adjustment scenario of a non-outage system. The method may include the following steps:

S1601: A target node v sends an initial transmission request to a neighboring node u1 and a neighboring node u2.

For specific implementation of this step, refer to step S1001 in the foregoing embodiment.

S1602: The neighboring node u1 sends first data $x_1$ to the target node v, and the neighboring node u2 sends first data $x_2$ to the target node v.

For specific implementation of this step, refer to step S1002 in the foregoing embodiment.

S1603: After receiving the first data $x_1$ sent by the neighboring node u1 and the first data $x_2$ sent by the neighboring node u2, the target node v performs inference by using a locally stored machine learning model, to obtain a first inference result $(\hat{c}_v)$, and calculates a robustness probability $p_v^{(r)}$ .

For an inference and calculation process, refer to step S804 in the foregoing embodiment.

S1604: When the robustness probability $p_v^{(r)}$ is greater than or equal to a specified target robustness probability $p_v^{(t)}$ , the first inference result $(\hat{c}_v)$ is output, and subsequent MCS level adjustment, retransmission and update operations are not performed in a process of a current round of inference; or when the robustness probability $p_v^{(r)}$ is less than a specified target robustness probability $p_v^{(t)}$ , the target node v estimates a BER between the target node v and the neighboring node u1, and compares the BER with the target bit error rate BER $\epsilon_v^*$ .

For a process of calculating the target BER $\epsilon_v^*$ , refer to step S804 in the foregoing embodiment.

In another embodiment, alternatively, when the robustness probability $p_v^{(r)}$ is greater than the specified target robustness probability $p_v^{(t)}$ , the first inference result $(\hat{c}_v)$ is output, and subsequent MCS level adjustment, retransmission, and update operations are not performed in a process of a current round of inference; or when the robustness probability $p_v^{(r)}$ is less than or equal to the specified target robustness probability $p_v^{(t)}$ , the target node v calculates a target bit error rate BER $\epsilon_v^*$ .

S1605: The target node v determines that a bit error rate of the neighboring node u1 $\epsilon_{v1} > \epsilon_v^*$ and a bit error rate of the neighboring node u2 $\epsilon_{v2} < \epsilon_v^*$ . The target node v estimates information about a channel between the target node v and the neighboring node u1, and determine a suggested first level of an MCS.

Specifically, the target terminal v may obtain the first level of the MCS based on the information about the channel between the target terminal v and the neighboring node u1 according to a given link adaptation algorithm. The given link adaptation algorithm may include: calculating signal-to-noise ratio information between the target terminal v and the neighboring node u1 based on the information about the channel between the target terminal v and the neighboring node u1, and obtaining a corresponding first level of an MCS based on a mapping relationship between the signal-to-noise ratio information and a level of an MCS. The mapping relationship between the signal-to-noise ratio information and the level of the MCS is predetermined.

S1606: The target node v sends LCI to the neighboring node u1, and correspondingly, the neighboring node u1 receives the LCI sent by the target node v.

When the neighboring node u1 needs to be indicated for MCS adjustment, the target node v sends LCI to the neighboring node u1. The LCI includes the suggested first level of the MCS and/or a suggested transmission resource used for a next data transmission.

The neighboring node u1 receives the LCI from the target node v.

In addition, a plurality of target nodes in the system may synchronously perform label inference. Therefore, the neighboring node u1 may receive LCI from a plurality of neighboring nodes. The LCI from the plurality of neighboring nodes separately includes levels of MCSs and/or transmission resources used for a next data transmission that are suggested by the plurality of neighboring nodes.

The neighboring node u1 adjusts a level of an MCS of the neighboring node u1 based on the received first level of the MCS and/or a level of an MCS suggested by another neighboring node.

After the neighboring node u1 receives the first level of the MCS sent by the target node v and/or the level of the MCS suggested by the another neighboring node, there are two adjustment solutions for the neighboring node u1, that is, S1607 and S1607'.

S1607: The neighboring node u1 uses a lowest level of an MCS in received levels of MCSs suggested by one or more neighboring nodes, and broadcasts, to the one or more neighboring nodes, first data $x_1$ that is recoded by the neighboring node u1 based on the lowest level of the MCS. In addition, the neighboring node u1 further broadcasts the adjusted level of the MCS. The neighboring node u1 comprehensively takes a received level of an MCS suggested by one or more neighboring nodes into consideration, and adjusts a level of an MCS to the lowest level of the MCS, to improve communication reliability and ensure inference performance of the target node v.

S1607': For a neighboring node that sends an MCS level suggestion to the neighboring node u1, the neighboring node u1 directly uses a level of an MCS suggested by the neighboring node. The neighboring node u1 unicasts, to each neighboring node, the first data $x_1$ recoded by the neighboring node u1 based on each suggested level of an MCS. In addition, the neighboring node u1 further unicasts the adjusted level of the MCS. The neighboring node u1 adjusts a level of an MCS based on a level of an MCS suggested by each target node, so that the level of the MCS may be adjusted in a targeted manner, thereby avoiding a waste of resources.

S1608: The target node v updates the first data of the neighboring node u1 based on the received retransmitted first data $x_1$.

For specific implementation of this step, refer to step S1009 in the foregoing embodiment. The foregoing process is repeated until the target robustness probability is reached.

According to the modulation and coding scheme adjustment mechanism provided in this embodiment, an appropriate adjustment criterion and an appropriate stop mechanism are formulated, and an objective of ensuring robustness of a distributed inference result by dynamically adjusting a modulation and coding scheme is achieved. In an existing retransmission mechanism, a throughput of a communication system is used as a performance indicator for adjusting a modulation and coding scheme. However, in distributed inference, a task of the system is to ensure robustness of a distributed inference result, with a specific tolerance for unreliable transmission. Therefore, in this embodiment, a new adjustment criterion and a stop mechanism are formulated, to implement appropriate utilization of communication resources and communication capabilities.

According to the communication method provided in this embodiment of this application, when there is a wireless transmission error, a neighboring node that does not satisfy a communication requirement is indicated to adjust a level of an MCS for retransmitting the first data, thereby improving robustness of distributed inference.

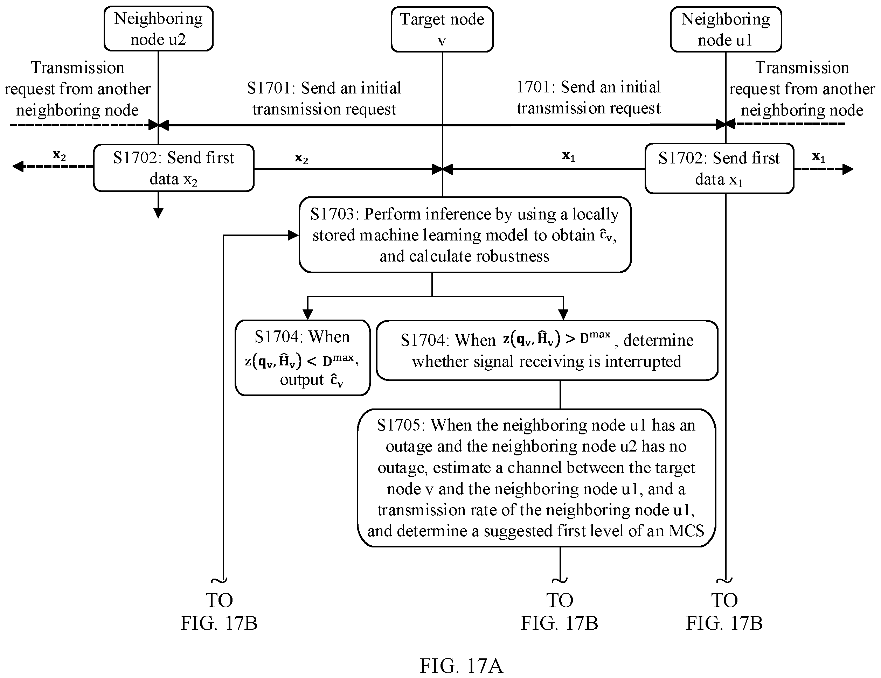

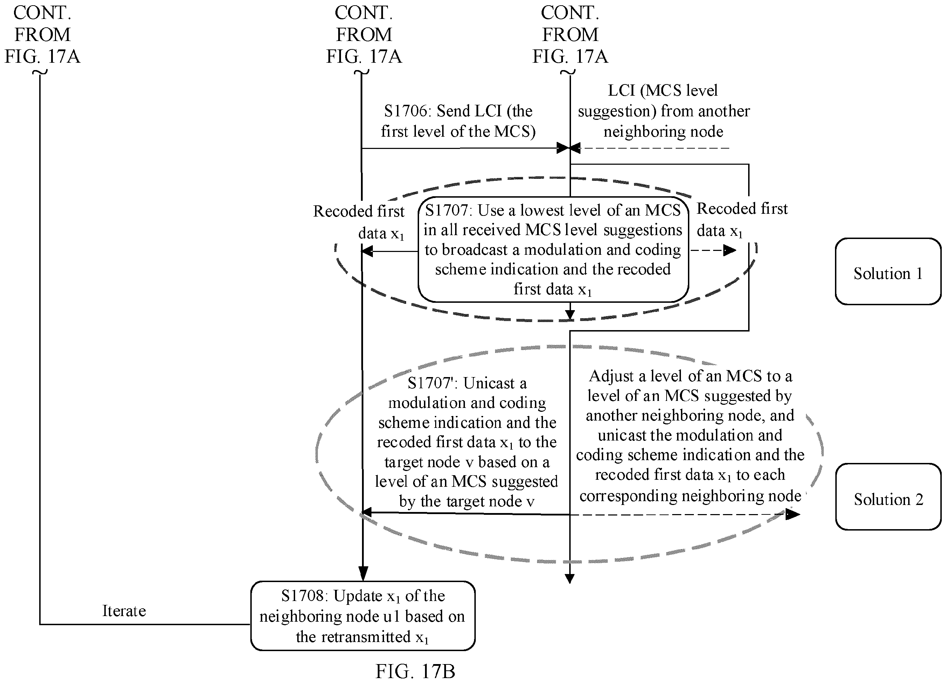

FIG. 17A and FIG. 17B are a schematic flowchart of another communication method according to an embodiment of this application. The method is applied to an MCS adjustment scenario of an outage system. The method may include the following steps:

S1701: A target node v sends an initial transmission request to a neighboring node u1 and a neighboring node u2.

For specific implementation of this step, refer to step S1001 in the foregoing embodiment.

S1702: The neighboring node u1 sends first data $x_1$ to the target node v, and the neighboring node u2 sends first data $x_2$ to the target node v.

For specific implementation of this step, refer to step S1002 in the foregoing embodiment.

S1703: After receiving the first data $x_1$ sent by the neighboring node u1 and the first data $x_2$ sent by the neighboring node u2, the target node v performs inference by using a locally stored machine learning model, to obtain a first inference result ($\hat{c}_v$), and calculates robustness.

For an inference and calculation process, refer to step S804 in the foregoing embodiment.

S1704: When $z(q_v, \hat{H}_v)$ is less than a specified inference bias $D^{max}$, the first inference result ($\hat{c}_v$) is output, and subsequent MCS level adjustment, retransmission, and update operations are not performed in a process of a current round of inference; or when $z(q_v, \hat{H}_v)$ is greater than the specified inference bias $D^{max}$, the target node v determines whether signal receiving is interrupted.

In another embodiment, alternatively, when $z(q_v, \hat{H}_v)$ is less than a specified inference bias $D^{max}$, the first inference result $(\hat{c}_v)$ is output, and subsequent MCS level adjustment, retransmission, and update operations are not performed in a process of a current round of inference; or when $z(q_v, \hat{H}_v)$ is greater than or equal to the specified inference bias $D^{max}$, the target node v determines whether signal receiving is interrupted.

S1705: The target node v determines that the neighboring node u1 has an outage and that the neighboring node u2 has no outage. Information about a channel between the target node v and the neighboring node u1 is estimated, and a suggested first level of an MCS is determined.

Specifically, the target terminal v may obtain the first level of the MCS based on the information about the channel between the target terminal v and the neighboring node u1 and transmission rate information according to a given link adaptation algorithm. The given link adaptation algorithm may include: calculating signal-to-noise ratio information between the target terminal v and the neighboring node u1 based on the information about the channel between the target terminal v and the neighboring node u1, and obtaining a corresponding first level of an MCS based on a mapping relationship between the signal-to-noise ratio information and a level of an MCS. The mapping relationship between the signal-to-noise ratio information and the level of the MCS is predetermined.

S1706: The target node v sends LCI to the neighboring node u1, and correspondingly, the neighboring node u1 receives the LCI sent by the target node v.

When the neighboring node u1 needs to be indicated for MCS adjustment, the target node v sends LCI to the neighboring node u1. The LCI includes the suggested first level of the MCS and/or a suggested transmission resource used for a next data transmission.

The neighboring node u1 receives the LCI from the target node v.

In addition, a plurality of target nodes in the system may synchronously perform label inference. Therefore, the neighboring node u1 may receive LCI from a plurality of neighboring nodes. The LCI from the plurality of neighboring nodes separately includes levels of MCSs and/or transmission resources used for a next data transmission that are suggested by the plurality of neighboring nodes.

The neighboring node u1 adjusts a level of an MCS of the neighboring node u1 based on the received first level of the MCS and/or a level of an MCS suggested by another neighboring node.

After the neighboring node u1 receives the first level of the MCS sent by the target node v and/or the level of the MCS suggested by the another neighboring node, there are two adjustment solutions for the neighboring node u1, that is, S1707 and S1707'.

S1707: The neighboring node u1 uses a lowest level of an MCS in received levels of MCSs suggested by one or more neighboring nodes, and broadcasts, to the one or more neighboring nodes, first data $x_1$ that is recoded by the neighboring node u1 based on the lowest level of the MCS. In addition, the neighboring node u1 further broadcasts the adjusted level of the MCS. The neighboring node u1 comprehensively takes a received level of an MCS suggested by one or more neighboring nodes into consideration, and adjusts a level of an MCS to the lowest level of the MCS, to improve communication reliability and ensure inference performance of the target node v.

S1707': For a neighboring node that sends an MCS level suggestion to the neighboring node u1, the neighboring node u1 directly uses a level of an MCS suggested by the neighboring node. The neighboring node u1 unicasts, to each neighboring node, the first data $x_1$ recoded by the neighboring node u1 based on each suggested level of an MCS. In addition, the neighboring node u1 further unicasts the adjusted level of the MCS. The neighboring node u1 adjusts a level of an MCS based on a level of an MCS suggested by each target node, so that the level of the MCS may be adjusted in a targeted manner, thereby avoiding a waste of resources.

S1708: The target node v updates the first data of the neighboring node u1 based on the received retransmitted first data $x_1$.

For specific implementation of this step, refer to step S1009 in the foregoing embodiment. The foregoing process is repeated until a robust inference result is obtained, that is, until $z(q_v, \hat{H}_v)$ is less than the specified inference bias $D^{max}$.

According to the modulation and coding scheme adjustment mechanism provided in this embodiment, an appropriate adjustment criterion and an appropriate stop mechanism are formulated, and an objective of ensuring robustness of a distributed inference result by dynamically adjusting a modulation and coding scheme is achieved. In an existing retransmission mechanism, a throughput of a communication system is used as a performance indicator for adjusting a modulation and coding scheme. However, in distributed inference, a task of the system is to ensure robustness of a distributed inference result, with a specific tolerance for unreliable transmission. Therefore, in this embodiment, a new adjustment criterion and a stop mechanism are formulated, to implement appropriate utilization of communication resources and communication capabilities.

According to the communication method provided in this embodiment of this application, when there is a wireless transmission error, a neighboring node that does not satisfy a communication requirement is indicated to adjust a level of an MCS for retransmitting the first data, thereby improving robustness of distributed inference.

In the foregoing solutions for adjusting a communication mechanism based on robustness of an inference result provided in this application, robustness of a distributed inference result is targeted, so that there is low complexity with appropriately used communication resources and a low system latency.

In this application, simulation verification is further performed on the foregoing beneficial effect. The following simulation scenario is considered: N terminal devices are randomly distributed in a square area with a side length of 2,000 m. If a distance between two terminals is less than 500 m, the two terminals may exchange information with each other. A transmission loss model is 128.1+37.6×log(d), where d is a distance between terminal devices, and is in a unit of kilometers. Small-scale fading is set to the Rayleigh (Rayleigh) distribution with uniform variance, and a bandwidth is 10 MHz. A distributed learning system is used to perform distributed learning, and each terminal device is corresponding to a binary label, {-1,1}, that is, a binary classification problem in a network is concerned. Both a feature dimension of each terminal device and an output vector dimension in the distributed learning system are set to 32, and both are generated based on Gaussian distribution.

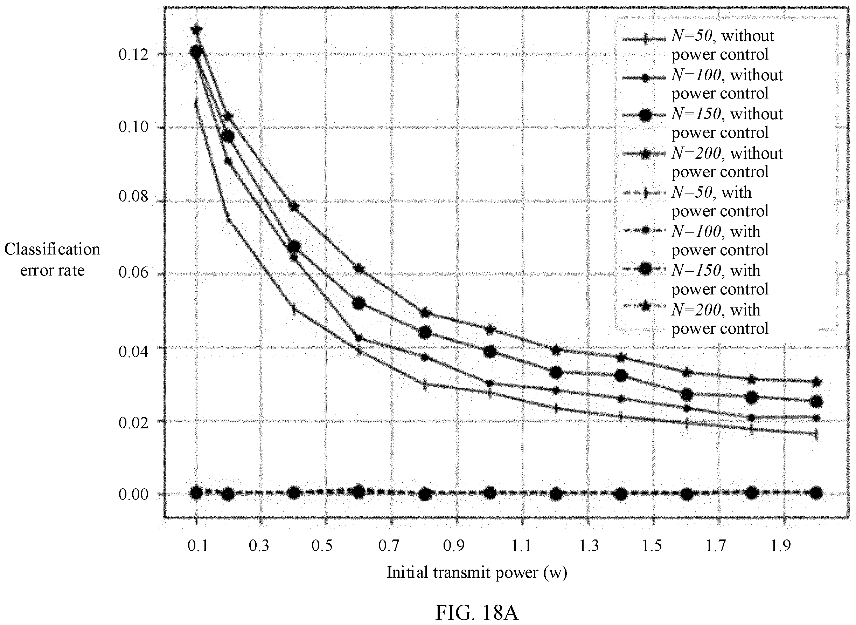

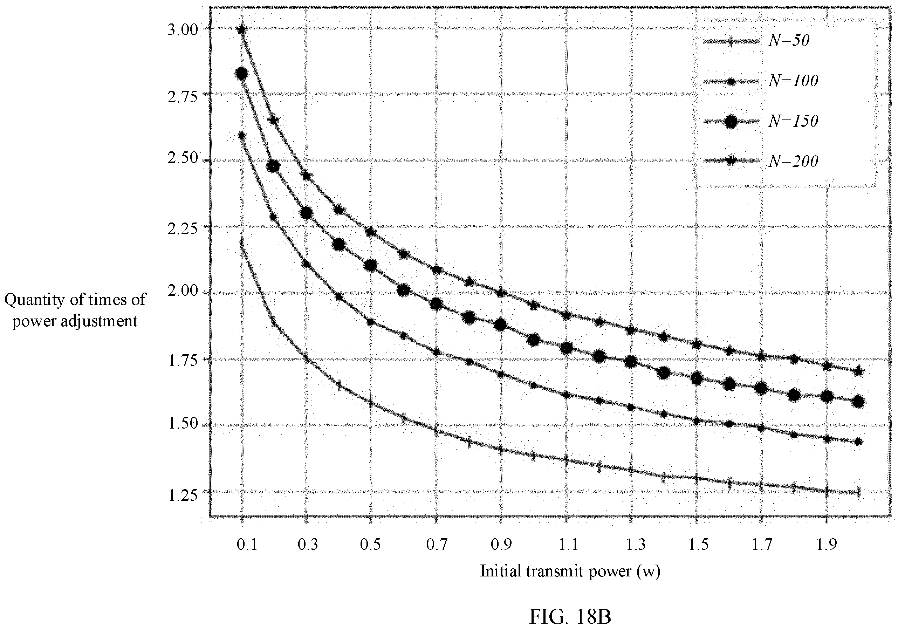

FIG. 18A and FIG. 18B show performance of the power control mechanism provided in this application that is used by a non-outage communication system with a target robustness probability $p_v^{(t)} = 80\%$ . The diagrams on the left show classification error rates of the non-outage communication system with power control and without power control. With power control, a classification error rate is almost 0%. The diagrams on the right show a quantity of times of power adjustment required for the non-outage communication system to achieve robustness. It can be seen that, according to this application, an error rate of an inference result can be effectively reduced (from about 12% to about 0%) through a few times of power adjustment (a maximum of three times, as shown in the diagrams on the right), and a robust distributed inference result can be efficiently obtained, thereby avoiding a waste of communication resources and reducing a system latency.

It can be understood that, to implement a function in the foregoing embodiments, the first distributed node and the second distributed node each include a corresponding hardware structure and/or a software module for performing the function. A person skilled in the art should be easily aware that, in combination with the units and the method steps in the examples described in embodiments disclosed in this application, this application can be implemented by using hardware or a combination of hardware and computer software. Whether a function is performed through hardware or hardware driven by computer software depends on particular application scenarios and design constraint conditions of the technical solutions.

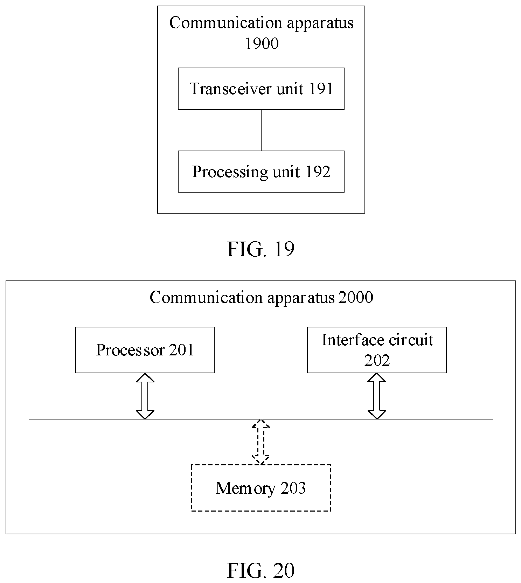

FIG. 19 and FIG. 20 are schematic diagrams of structures of possible communication apparatuses according to embodiments of this application. These communication apparatuses may be configured to implement functions of a first distributed node or a second distributed node in the foregoing method embodiments, and therefore can also implement beneficial effect of the foregoing method embodiments. In the embodiments of this application, the communication apparatus may be the first distributed node 101 shown in FIG. 1, may be one second distributed node 102 shown in FIG. 1, or may be a module (for example, a chip) used in the first distributed node or the second distributed node.

As shown in FIG. 19, a communication apparatus 1900 includes a transceiver unit 191 and a processing unit 192. The communication apparatus 1900 is configured to implement a function of the first distributed node or the second distributed node in the method embodiments shown in FIG. 7 to FIG. 17A and FIG. 17B.

When the communication apparatus 1900 is configured to implement the function of the first distributed node in the method embodiments shown in FIG. 7 to FIG. 17A and FIG. 17B, the transceiver unit 191 is configured to send communication mechanism indication information to at least one second distributed node adjacent to the communication apparatus, where the communication mechanism indication information is obtained based on a robustness requirement of a distributed learning system; the transceiver unit 191 is further configured to receive at least one piece of first data from the at least one second distributed node, where the at least one piece of first data is transmitted by the at least one second distributed node based on the communication mechanism indication information; and the processing unit 192 is configured to perform inference by using a distributed learning model based on second data of the communication apparatus and the at least one piece of first data.

Optionally, the transceiver unit 191 is further configured to send first indication information to the at least one second distributed node, or the transceiver unit 191 is further configured to send first indication information to a central node, so that the central node forwards the first indication information to the at least one second distributed node, where the first indication information indicates the at least one second distributed node to send the at least one piece of first data to the communication apparatus; and the first indication information includes at least one piece of the following information: resource scheduling information for transmitting the at least one piece of first data, inference task information, an amount of requested data, or a type of requested data.

Optionally, the transceiver unit 191 is further configured to send second indication information to the at least one second distributed node, where the second indication information indicates that the distributed learning system is in a machine learning inference mode.

Optionally, the transceiver unit 191 is further configured to receive at least one piece of third data from the at least one second distributed node; and the processing unit 192 is further configured to: perform inference based on the second data and the at least one piece of third data by using the distributed learning model, and determine that an inference result is not robust.

Optionally, the communication mechanism indication information indicates the at least one second distributed node to transmit the at least one piece of first data, or the communication mechanism indication information indicates the at least one second distributed node to adjust a communication mechanism and transmit the at least one piece of first data according to an adjusted communication mechanism, and the at least one piece of first data is retransmitted data of the at least one piece of third data.

Optionally, the processing unit 192 is configured to perform any one of the following: determining that a robustness probability is less than a specified target robustness probability, where the robustness probability is a probability that a quantity of transmitted erroneous bits in the at least one piece of first data is less than a maximum quantity of erroneous bits, and the maximum quantity of erroneous bits is a maximum quantity of erroneous bits that are allowed to be transmitted if the robustness requirement of the distributed learning system is satisfied; determining that a bit error rate of the at least one second distributed node is greater than a target bit error rate, where the target bit error rate is a maximum allowable bit error rate that satisfies the robustness requirement of the distributed learning system; or determining that a maximum inference bias is greater than a specified inference bias, where the maximum inference bias is a maximum value among all possible inference biases.

Optionally, the communication mechanism indication information includes at least one of the following: a communication quality requirement; retransmission indication information; or communication mechanism adjustment information.

Optionally, the communication quality requirement includes a first bit error rate, where the first bit error rate is the maximum allowable bit error rate that satisfies the robustness requirement of the distributed learning system; the retransmission indication information includes a data receiving failure indication and/or a transmission resource used for a next data transmission; the communication mechanism adjustment information includes a suggested first transmit power and/or a suggested transmission resource used for a next data transmission, where the first transmit power is associated with the target bit error rate and a status of a first channel between the communication apparatus and the at least one second distributed node, or the first transmit power is associated with a first transmission rate of the at least one second distributed node and a status of a second channel between the communication apparatus and the at least one second distributed node; or the communication mechanism adjustment information includes a suggested level of a first modulation and coding scheme and/or a suggested transmission resource used for a next data transmission, where the level of the first modulation and coding scheme is associated with a second transmission rate of the at least one second distributed node and a status of a third channel between the communication apparatus and the at least one second distributed node.

When the communication apparatus 1900 is configured to implement the function of the second distributed node in the method embodiments shown in FIG. 7 to FIG. 17A and FIG. 17B, the transceiver unit 191 is configured to receive communication mechanism indication information from the at least one first distributed node, where the communication mechanism indication information is obtained based on a robustness requirement of the distributed learning system; and the transceiver unit 191 is further configured to send first data to the at least one first distributed node based on the communication mechanism indication information.

Optionally, the transceiver unit 191 is further configured to receive first indication information from the at least one first distributed node or a central node, where the first indication information indicates the communication apparatus to send the first data to the at least one first distributed node, where the first indication information includes at least one piece of the following information: resource scheduling information for transmitting the first data, inference task information, an amount of requested data, or a type of requested data.

Optionally, the transceiver unit 191 is further configured to receive second indication information sent by the at least one first distributed node or the central node, where the second indication information indicates that the distributed learning system is in a machine learning inference mode.

Optionally, the communication mechanism indication information indicates the communication apparatus to transmit the first data, or the communication mechanism indication information indicates the communication apparatus to adjust a communication mechanism and transmit the first data according to an adjusted communication mechanism, and the first data is retransmitted data.

Optionally, the communication mechanism indication information includes at least one of the following: a communication quality requirement; retransmission indication information; or communication mechanism adjustment information.

Optionally, the communication quality requirement includes a first bit error rate, where the first bit error rate is the maximum allowable bit error rate that satisfies the robustness requirement of the distributed learning system; or the retransmission indication information includes a data receiving failure indication and/or a transmission resource used for a next data transmission; the communication mechanism adjustment information includes a suggested first transmit power and/or a suggested transmission resource used for a next data transmission, where the first transmit power is associated with the target bit error rate and a status of a first channel between the communication apparatus and the at least one first distributed node, and the target bit error rate is a maximum allowable bit error rate that satisfies the robustness requirement of the distributed learning system; or the first transmit power is associated with a first transmission rate of the communication apparatus and a status of a second channel between the communication apparatus and the at least one first distributed node; or the communication mechanism adjustment information includes a suggested level of a first modulation and coding scheme and/or a suggested transmission resource used for a next data transmission, where the level of the first modulation and coding scheme is associated with a second transmission rate of the communication apparatus and a status of a third channel between the communication apparatus and the at least one first distributed node.

Optionally, the processing unit 192 is configured to determine a second transmit power. The transceiver unit 191 is further configured to send the first data to the at least one first distributed node at the second transmit power, where the second transmit power is a smaller value in a first maximum transmit power allowed by the communication apparatus and the first transmit power; or the second transmit power is a smaller value in a first maximum transmit power allowed by the communication apparatus and a second maximum transmit power, where the second maximum transmit power is a maximum value in a plurality of first transmit powers received by the communication apparatus from a plurality of first distributed nodes.

Optionally, the processing unit 192 is configured to determine a second modulation and coding scheme. The transceiver unit 191 is further configured to send the first data to the at least one first distributed node according to the second modulation and coding scheme, where the second modulation and coding scheme is of the same level as the first modulation and coding scheme, or the second modulation and coding scheme is of a lowest level in a plurality of levels of the first modulation and coding scheme received by the communication apparatus from the at least one first distributed node adjacent to the communication apparatus.

For more detailed descriptions of the transceiver unit 191 and the processing unit 192, directly refer to related descriptions in the method embodiments shown in FIG. 7 to FIG. 17A and FIG. 17B. Details are not described herein again.

As shown in FIG. 20, a communication apparatus 2000 includes a processor 201 and an interface circuit 202. The processor 201 and the interface circuit 202 are coupled to each other. It can be understood that the interface circuit 202 may be a transceiver or an input/output interface. Optionally, the communication apparatus 2000 may further include a memory 203, configured to store instructions executed by the processor 201, input data for the processor 201 to run the instructions, or data generated after the processor 201 runs the instructions.

When the communication apparatus 2000 is configured to implement the methods shown in FIG. 7 to FIG. 17A and FIG. 17B, the processor 201 is configured to perform a function of the processing unit 192, and the interface circuit 202 is configured to perform a function of the transceiver unit 191.

When the communication apparatus is a chip used in the second distributed node, the chip implements a function of the second distributed node in the foregoing method embodiments. The chip receives information from another module (for example, a radio frequency module or an antenna) in the second distributed node, where the information is sent by the first distributed node to the second distributed node; or the chip in the second distributed node sends information to another module (for example, a radio frequency module or an antenna) in the second distributed node, where the information is sent by the second distributed node to the first distributed node.

When the communication apparatus is a chip used in the first distributed node, the chip implements a function of the first distributed node in the foregoing method embodiments. The chip receives information from another module (for example, a radio frequency module or an antenna) in the first distributed node, where the information is sent by the second distributed node to the first distributed node; or the chip in the first distributed node sends information to another module (for example, a radio frequency module or an antenna) in the first distributed node, where the information is sent by the first distributed node to the second distributed node.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another logic device, a programmable logic device, a transistor logic device, a hardware component, or any combination thereof. The general-purpose processor may be a microprocessor, or may be any conventional processor.

Steps in a method in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Clearly, the storage medium may be a component of the processor. The processor and the storage medium may be disposed in an ASIC. In addition, the ASIC may be located on the first distributed node or the second distributed node. Clearly, the processor and the storage medium may exist in the first distributed node or the second distributed node as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer program or instruction is loaded and executed on a computer, the procedures or the functions described in embodiments of this application are fully or partially performed. The computer may be a general-purpose computer, a dedicated computer, a computer network, the first distributed node, user equipment, or another programmable apparatus. The computer program or instruction may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

An embodiment of this application further provides a distributed learning system. The distributed learning system includes at least two distributed nodes, and the at least two distributed nodes include the first distributed node and at least one second distributed node adjacent to the first distributed node.

In embodiments of this application, unless otherwise specified or there is a logical conflict, terms and/or descriptions in different embodiments are consistent and may be mutual references. Technical features in different embodiments may be combined to form a new embodiment according to an internal logical relationship between the different embodiments.

In this application, "at least one" means one or more, and "plurality of" means two or more. "and/or" describes an association relationship between associated objects, and indicates that three relationships may exist. For example, A and/or B may indicate the following three cases: only A exists, both A and B exist, and only B exists, where A and B may be singular or plural. In the textual descriptions of this application, the character "/" usually indicates an "or" relationship between associated objects. In a formula in this application, the character "/" indicates a "division" relationship between the associated objects. In this application, "first" and "second" are merely examples, and there may be one or more "first" or "second" items. "First" and "second" are only used to distinguish between objects of a same type. A first object and a second object may be a same object, or may be different objects.

It should be noted that the terms "system" and "network" may be used interchangeably in embodiments of this application. "A plurality of" means two or more. In view of this, "a plurality of" may also be understood as "at least two" in embodiments of this application. The term "and/or" describes an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects.

It can be understood that various serial numbers in embodiments of this application are merely for the purpose of distinction for ease of description, but are not intended to limit the scope of embodiments of this application. Sequence numbers of the foregoing processes do not mean a sequence for performing. The sequence for performing the processes should be determined based on functions and internal logic of the processes.

**Claims**

1. A communication method, applied to a distributed learning system, wherein the distributed learning system comprises at least two distributed nodes, the at least two distributed nodes comprise a first distributed node and at least one second distributed node, and the method comprises:

    sending, by the first distributed node, communication mechanism indication information to the at least one second distributed node adjacent to the first distributed node, wherein the communication mechanism indication information is obtained based on a robustness requirement of the distributed learning system;
    receiving, by the first distributed node, at least one piece of first data from the at least one second distributed node, wherein the at least one piece of first data is transmitted by the at least one second distributed node based on the communication mechanism indication information; and
    performing, by the first distributed node, inference based on second data of the first distributed node and the at least one piece of first data by using a distributed learning model.

**2.** The method according to claim 1, wherein the method further comprises:

sending, by the first distributed node, first indication information to the at least one second distributed node, or sending, by the first distributed node, first indication information to a central node, so that the central node forwards the first indication information to the at least one second distributed node, wherein
the first indication information indicates the at least one second distributed node to send the at least one piece of first data to the first distributed node; and
the first indication information comprises at least one piece of the following information: resource scheduling information for transmitting the at least one piece of first data, inference task information, an amount of requested data, or a type of requested data.

**3.** The method according to claim 1 or 2, wherein the method further comprises:
sending, by the first distributed node, second indication information to the at least one second distributed node, wherein the second indication information indicates that the distributed learning system is in a machine learning inference mode.

**4.** The method according to any one of claims 1 to 3, wherein before the sending, by the first distributed node, communication mechanism indication information to the at least one second distributed node, the method further comprises:

receiving, by the first distributed node, at least one piece of third data from the at least one second distributed node; and
performing, by the first distributed node, inference based on the second data and the at least one piece of third data by using the distributed learning model, and determining that an inference result is not robust.

**5.** The method according to claim 4, wherein the communication mechanism indication information indicates the at least one second distributed node to transmit the at least one piece of first data, or the communication mechanism indication information indicates the at least one second distributed node to adjust a communication mechanism and transmit the at least one piece of first data according to an adjusted communication mechanism, and the at least one piece of first data is retransmitted data of the at least one piece of third data.

**6.** The method according to claim 4 or 5, wherein the determining, by the first distributed node, that an inference result is not robust comprises any one of the following:

determining, by the first distributed node, that a robustness probability is less than a specified target robustness probability, wherein the robustness probability is a probability that a quantity of transmitted erroneous bits in the at least one piece of first data is less than a maximum quantity of erroneous bits, and the maximum quantity of erroneous bits is a maximum quantity of erroneous bits that are allowed to be transmitted if the robustness requirement of the distributed learning system is satisfied;
determining, by the first distributed node, that a bit error rate of the at least one second distributed node is greater than a target bit error rate, wherein the target bit error rate is a maximum allowable bit error rate that satisfies the robustness requirement of the distributed learning system; or
determining, by the first distributed node, that a maximum inference bias is greater than a specified inference bias, wherein the maximum inference bias is a greatest value among all possible inference biases.

**7.** The method according to any one of claims 1 to 6, wherein the communication mechanism indication information comprises at least one of the following:

a communication quality requirement;
retransmission indication information; and
communication mechanism adjustment information.

**8.** The method according to claim 7, wherein the communication quality requirement comprises a first bit error rate, wherein the first bit error rate is the maximum allowable bit error rate that satisfies the robustness requirement of the distributed learning system;

the retransmission indication information comprises a data receiving failure indication and/or a transmission resource used for a next data transmission;

the communication mechanism adjustment information comprises a suggested first transmit power and/or a suggested transmission resource used for a next data transmission, wherein the first transmit power is associated with the target bit error rate and a status of a first channel between the first distributed node and the at least one second distributed node, or the first transmit power is associated with a first transmission rate of the at least one second distributed node and a status of a second channel between the first distributed node and the at least one second distributed node; or

the communication mechanism adjustment information comprises a suggested level of a first modulation and coding scheme and/or a suggested transmission resource used for next data transmission, wherein the level of the first modulation and coding scheme is associated with a second transmission rate of the at least one second distributed node and a status of a third channel between the first distributed node and the at least one second distributed node.

9. A communication method, applied to a distributed learning system, wherein the distributed learning system comprises at least two distributed nodes, the at least two distributed nodes comprise at least one first distributed node and a second distributed node, and the method comprises:

receiving, by the second distributed node, communication mechanism indication information from the at least one first distributed node, wherein the communication mechanism indication information is obtained based on a robustness requirement of the distributed learning system; and

sending, by the second distributed node, first data to the at least one first distributed node based on the communication mechanism indication information.

10. The method according to claim 9, wherein the method further comprises:

receiving, by the second distributed node, first indication information from the at least one first distributed node or a central node, wherein the first indication information indicates the second distributed node to send the first data to the at least one first distributed node, wherein

the first indication information comprises at least one piece of the following information: resource scheduling information for transmitting the first data, inference task information, an amount of requested data, or a type of requested data.

11. The method according to claim 9 or 10, wherein the method further comprises: receiving, by the second distributed node, second indication information from the at least one first distributed node or the central node, wherein the second indication information indicates that the distributed learning system is in a machine learning inference mode.

12. The method according to claim 9 or 10, wherein the communication mechanism indication information indicates the second distributed node to transmit the first data, or the communication mechanism indication information indicates the second distributed node to adjust a communication mechanism and transmit the first data according to an adjusted communication mechanism, and the first data is retransmitted data.

13. The method according to any one of claims 9 to 12, wherein the communication mechanism indication information comprises at least one of the following:

a communication quality requirement;
retransmission indication information; and
communication mechanism adjustment information.

14. The method according to claim 13, wherein

the communication quality requirement comprises a first bit error rate, wherein the first bit error rate is the maximum allowable bit error rate that satisfies the robustness requirement of the distributed learning system; or the retransmission indication information comprises a data receiving failure indication and/or a transmission resource used for a next data transmission;

the communication mechanism adjustment information comprises a suggested first transmit power and/or a suggested transmission resource used for a next data transmission, wherein the first transmit power is associated with the target bit error rate and a status of a first channel between the second distributed node and the at least one first distributed node, and the target bit error rate is a maximum allowable bit error rate that satisfies the robustness requirement of the distributed learning system; or the first transmit power is associated with a first transmission rate of the second distributed node and a status of a second channel between the second distributed node and the at least one first distributed node; or

the communication mechanism adjustment information comprises a suggested level of a first modulation and coding scheme and/or a suggested transmission resource used for a next data transmission, wherein the level of the first modulation and coding scheme is associated with a second transmission rate of the second distributed node and a status of a third channel between the second distributed node and the at least one first distributed node.

15. The method according to claim 14, wherein the sending, by the second distributed node, first data to the at least one first distributed node based on the communication mechanism indication information comprises:

determining, by the second distributed node, a second transmit power; and
sending, by the second distributed node, the first data to the at least one first distributed node at the second transmit power, wherein
the second transmit power is a smaller value in a first maximum transmit power allowed by the second distributed node and the first transmit power; or
the second transmit power is a smaller value in a first maximum transmit power allowed by the second distributed node and a second maximum transmit power, wherein the second maximum transmit power is a maximum value in a plurality of first transmit powers received by the second distributed node from a plurality of first distributed nodes.

16. The method according to claim 14, wherein the sending, by the second distributed node, first data to the at least one first distributed node based on the communication mechanism indication information comprises:

determining, by the second distributed node, a second modulation and coding scheme; and
sending, by the second distributed node, the first data to the at least one first distributed node according to the second modulation and coding scheme, wherein
the second modulation and coding scheme is of the same level as the first modulation and coding scheme, or
the second modulation and coding scheme is of a lowest level in a plurality of levels of the first modulation and coding scheme received by the second distributed node from the at least one first distributed node adjacent to the second distributed node.

17. A communication apparatus, used in a distributed learning system, wherein the distributed learning system comprises at least two distributed nodes, the at least two distributed nodes comprise the communication apparatus and at least one second distributed node, and the apparatus comprises:

a transceiver unit, configured to send communication mechanism indication information to the at least one second distributed node adjacent to the communication apparatus, wherein the communication mechanism indication information is obtained based on a robustness requirement of the distributed learning system, and
the transceiver unit is further configured to receive at least one piece of first data from the at least one second distributed node, wherein the at least one piece of first data is transmitted by the at least one second distributed node based on the communication mechanism indication information; and
a processing unit, configured to perform inference by using a distributed learning model based on second data of the communication apparatus and the at least one piece of first data.

18. The apparatus according to claim 17, wherein

the transceiver unit is further configured to send first indication information to the at least one second distributed node; or
the transceiver unit is further configured to send first indication information to a central node, so that the central node forwards the first indication information to the at least one second distributed node, wherein
the first indication information indicates the at least one second distributed node to send the at least one piece of first data to the communication apparatus; and
the first indication information comprises at least one piece of the following information: resource scheduling information for transmitting the at least one piece of first data, inference task information, an amount of requested data, or a type of requested data.

19. The apparatus according to claim 17 or 18, wherein the transceiver unit is further configured to send second indication information to the at least one second distributed node, and the second indication information indicates that the distributed learning system is in a machine learning inference mode.

20. The apparatus according to any one of claims 17 to 19, wherein

the transceiver unit is further configured to receive at least one piece of third data from the at least one second distributed node; and
the processing unit is further configured to: perform inference based on the second data and the at least one piece of third data by using the distributed learning model, and determine that an inference result is not robust.

21. The apparatus according to claim 20, wherein the communication mechanism indication information indicates the at least one second distributed node to transmit the at least one piece of first data, or the communication mechanism indication information indicates the at least one second distributed node to adjust a communication mechanism and transmit the at least one piece of first data according to an adjusted communication mechanism, and the at least one piece of first data is retransmitted data of the at least one piece of third data.

22. The apparatus according to claim 20 or 21, wherein the processing unit is configured to perform any one of the following:

determine that a robustness probability is less than a specified target robustness probability, wherein the robustness probability is a probability that a quantity of transmitted erroneous bits in the at least one piece of first data is less than a maximum quantity of erroneous bits, and the maximum quantity of erroneous bits is a maximum quantity of erroneous bits that are allowed to be transmitted if the robustness requirement of the distributed learning system is satisfied;
determine that a bit error rate of the at least one second distributed node is greater than a target bit error rate, wherein the target bit error rate is a maximum allowable bit error rate that satisfies the robustness requirement of the distributed learning system; or
determine that a maximum inference bias is greater than a specified inference bias, wherein the maximum inference bias is a maximum value among all possible inference biases.

23. The apparatus according to any one of claims 17 to 22, wherein the communication mechanism indication information comprises at least one of the following:

a communication quality requirement;
retransmission indication information; and
communication mechanism adjustment information.

24. The apparatus according to claim 23, wherein the communication quality requirement comprises a first bit error rate, wherein the first bit error rate is the maximum allowable bit error rate that satisfies the robustness requirement of the distributed learning system;

the retransmission indication information comprises a data receiving failure indication and/or a transmission resource used for a next data transmission;
the communication mechanism adjustment information comprises a suggested first transmit power and/or a suggested transmission resource used for a next data transmission, wherein the first transmit power is associated with the target bit error rate and a status of a first channel between the communication apparatus and the at least one second distributed node, or the first transmit power is associated with a first transmission rate of the at least one second distributed node and a status of a second channel between the communication apparatus and the at least one second distributed node; or
the communication mechanism adjustment information comprises a suggested level of a first modulation and coding scheme and/or a suggested transmission resource used for a next data transmission, wherein the level of the first modulation and coding scheme is associated with a second transmission rate of the at least one second distributed node and a status of a third channel between the communication apparatus and the at least one second distributed node.

25. A communication apparatus, used in a distributed learning system, wherein the distributed learning system comprises at least two distributed nodes, the at least two distributed nodes comprise at least one first distributed node and the communication apparatus, and the apparatus comprises:

a transceiver unit, configured to receive communication mechanism indication information from the at least one first distributed node, wherein the communication mechanism indication information is obtained based on a robustness requirement of the distributed learning system, and
the transceiver unit is further configured to send first data to the at least one first distributed node based on the communication mechanism indication information.

26. The apparatus according to claim 25, wherein the transceiver unit is further configured to receive first indication information from the at least one first distributed node or a central node, wherein the first indication information indicates the communication apparatus to send the first data to the at least one first distributed node, wherein the first indication information comprises at least one piece of the following information: resource scheduling information for transmitting the first data, inference task information, an amount of requested data, or a type of requested data.

27. The apparatus according to claim 25 or 26, wherein the transceiver unit is further configured to receive second indication information from the at least one first distributed node or the central node, wherein the second indication information indicates that the distributed learning system is in a machine learning inference mode.

28. The apparatus according to any one of claims 25 to 27, wherein the communication mechanism indication information indicates the communication apparatus to transmit the first data, or the communication mechanism indication information indicates the communication apparatus to adjust a communication mechanism and transmit the first data according to an adjusted communication mechanism, and the first data is retransmitted data.

29. The apparatus according to any one of claims 25 to 28, wherein the communication mechanism indication information comprises at least one of the following:

   a communication quality requirement;
   retransmission indication information; and
   communication mechanism adjustment information.

30. The apparatus according to claim 29, wherein

   the communication quality requirement comprises a first bit error rate, wherein the first bit error rate is the maximum allowable bit error rate that satisfies the robustness requirement of the distributed learning system; or the retransmission indication information comprises a data receiving failure indication and/or a transmission resource used for a next data transmission;
   the communication mechanism adjustment information comprises a suggested first transmit power and/or a suggested transmission resource used for a next data transmission, wherein the first transmit power is associated with the target bit error rate and a status of a first channel between the communication apparatus and the at least one first distributed node, and the target bit error rate is a maximum allowable bit error rate that satisfies the robustness requirement of the distributed learning system; or the first transmit power is associated with a first transmission rate of the communication apparatus and a status of a second channel between the communication apparatus and the at least one first distributed node; or
   the communication mechanism adjustment information comprises a suggested level of a first modulation and coding scheme and/or a suggested transmission resource used for a next data transmission, wherein the level of the first modulation and coding scheme is associated with a second transmission rate of the communication apparatus and a status of a third channel between the communication apparatus and the at least one first distributed node.

31. The apparatus according to claim 30, wherein the apparatus further comprises:

   a processing unit, configured to determine a second transmit power, wherein
   the transceiver unit is further configured to send the first data to the at least one first distributed node at the second transmit power, wherein
   the second transmit power is a smaller value in a first maximum transmit power allowed by the communication apparatus and the first transmit power; or
   the second transmit power is a smaller value in a first maximum transmit power allowed by the communication apparatus and a second maximum transmit power, wherein the second maximum transmit power is a maximum value in a plurality of first transmit powers received by the communication apparatus from a plurality of first distributed nodes.

32. The apparatus according to claim 30, wherein the apparatus further comprises:

a processing unit, configured to determine a second modulation and coding scheme, wherein
the transceiver unit is further configured to send the first data to the at least one first distributed node according to the second modulation and coding scheme, wherein
the second modulation and coding scheme is of the same level as the first modulation and coding scheme, or the second modulation and coding scheme is of a lowest level in a plurality of levels of the first modulation and coding scheme received by the communication apparatus from the at least one first distributed node adjacent to the communication apparatus.

33. A communication apparatus, comprising a processor, wherein the processor is coupled to a memory, and the processor is configured to read instructions in the memory, to implement the method according to any one of claims 1 to 8, or implement the method according to any one of claims 9 to 16.

34. A computer-readable storage medium, storing a computer program, wherein when the program is executed by a processor, the method according to any one of claims 1 to 8 or the method according to any one of claims 9 to 16 is implemented.

35. A computer program product, configured to: when the computer program product is executed on a computing device, perform the method according to any one of claims 1 to 8, or perform the method according to any one of claims 9 to 16.

36. A communication system, comprising the communication apparatus according to any one of claims 17 to 24 and the communication apparatus according to any one of claims 25 to 32.

FIG. 1

FIG. 2

Send a
signal

```
          ┌──────────┐        ┌──────────┐
  ───────▶│ Encoding │───────▶│Modulation│────┐
          └──────────┘        └──────────┘    │
                                               ▼
                                         ┌──────────┐
                                         │ Wireless │
                                         │ channel  │
                                         └──────────┘
                                               │
Receive                                        ▼
the signal ┌──────────┐      ┌─────────────┐  │
  ◀────────│ Decoding │◀─────│Demodulation │◀─┘
          └──────────┘      └─────────────┘
```

FIG. 3

Transmitter                    Receiver

Packet ────────────▶ Packet ✕     Fail to receive
        ◀─ ─ ─ ─ NACK                correctly

Packet ────────────▶ Packet        Receive
                                    correctly

┌──────────────┐
│ Transmission │ ◀─ ─ ─ ─ ACK
│    done      │
└──────────────┘

Timeline

FIG. 4

```
┌─────────────┐     ┌─────────────┐     ┌─────────────┐     ┌─────────────┐
│Power control│ ──► │ Mathematical│ ──► │ Mathematical│ ──► │  Optimal/   │
│   problem   │     │ optimization│     │ optimization│     │ Suboptimal  │
│             │     │   problem   │     │  algorithm  │     │  solution   │
└─────────────┘     └─────────────┘     └─────────────┘     └─────────────┘
```

Based on
reinforcement
learning

FIG. 5

Coding

AMC

Channel
status

Modulation

FIG. 6

```
┌─────────────────┐                              ┌─────────────────┐
│ First distributed│                              │ Second distributed│
│   node 101       │                              │    node 102      │
└─────────────────┘                              └─────────────────┘
        │                                                 │
        │   S701: Communication mechanism                 │
        │        indication information                   │
        │ ───────────────────────────────────────────▶   │
        │                                                 │
        │                                                 │
        │          S702: First data                       │
        │ ◀─────────────────────────────────────────────  │
        │                                                 │
┌─────────────────────────────────────────┐              │
│ S703: The first distributed node performs│              │
│  inference based on second data of the first│           │
│ distributed node and the first data by using a│         │
│       distributed learning model          │              │
└─────────────────────────────────────────┘              │
        │                                                 │
```

FIG. 7

FIG. 8

S901

Perform linear fitting or convex hull fitting on a non-linear activation function in a machine learning model

S902

Relax a binary optimization variable to a continuous variable between 0 and 1

S903

Determine a type of an optimization problem, and solve the optimization problem by using a corresponding algorithm

S904

Obtain a suboptimal solution or an optimal solution

FIG. 9

Neighboring
node u2

Target node
v

Neighboring
node u1

Transmission request
from another
neighboring node

Transmission
request from another
neighboring node

S1001: Send an initial
transmission request

S1001: Send an initial
transmission request

$x_2$

$x_2$

$x_1$

$x_1$

S1002: Send first
data $x_2$

S1002: Send first
data $x_1$

S1003: Perform inference by using a locally
stored machine learning model to obtain $\hat{c}_v$,
and calculate a robustness probability

S1004: When $p_v^{(r)} > p_v^{(t)}$, output $\hat{c}_v$

S1004: When $p_v^{(r)} < p_v^{(t)}$, calculate $\epsilon_v^*$

S1005: Obtain $\epsilon_{v1} > \epsilon_v^*$ and $\epsilon_{v2} < \epsilon_v^*$, and
estimate a channel between the target
node v and the neighboring node u1

S1006: Send LQI
(channel information
and the target BER $\epsilon_v^*$ )

Channel information
and a BER
requirement from
another neighboring
node

S1008:
Retransmit $x_1$

S1007: Comprehensively determine
an adjusted communication
mechanism based on channel
information and BER requirements
of all neighboring nodes

$x_1$

Iterate

S1009: Update $x_1$ of the
neighboring node u1
based on retransmitted $x_1$

FIG. 10

Neighboring node u2

Target node v

Neighboring node u1

Transmission request from another neighboring node

S1101: Send an initial transmission request

S1101: Send an initial transmission request

Transmission request from another neighboring node

$x_2$

S1102: Send first data $x_2$

$x_2$

$x_1$

S1102: Send first data $x_1$

$x_1$

S1103: Perform inference by using a locally stored machine learning model to obtain $\hat{c}_v$, and calculate a robustness probability

S1104: When $p_v^{(r)} > p_v^{(t)}$, output $\hat{c}_v$

S1104: When $p_v^{(r)} < p_v^{(t)}$, estimate a BER between the target node v and the neighboring node u1, and compare the BER with $\epsilon_v^*$

S1105: Obtain $\epsilon_{v1} > \epsilon_v^*$ and $\epsilon_{v2} < \epsilon_v^*$, and estimate a channel between the target node v and the neighboring node u1, and determine an adjusted communication mechanism of the neighboring node u1

S1106: Send communication mechanism indication information

Communication mechanism indication information from another neighboring node

1108: Retransmit the first data $x_1$

S1107: Comprehensively determine an adjusted communication mechanism based on communication mechanism indication information from all neighboring nodes

$x_1$

Iterate

S1109: Update $x_1$ of the neighboring node u1 based on the retransmitted $x_1$

FIG. 11

EP 4 412 287 A1

Neighboring node u1

Target node v

Neighboring node u2

Transmission request from another neighboring node

S1201: Send an initial transmission request

S1201: Send an initial transmission request

Transmission request from another neighboring node

S1202: Send first data $x_1$

$x_1$

S1202: Send first data $x_2$

$x_2$

S1203: Perform inference by using a locally stored machine learning model to obtain $\hat{c}_v$, and calculate a robustness probability

S1204: When $p_v^{(r)} < p_v^{(t)}$, estimate a BER between the target node v and the neighboring node u1, and compare the BER with $\epsilon_v^*$

S1204: When $p_v^{(r)} > p_v^{(t)}$, output $\hat{c}_v$

S1205: Determine $\epsilon_{v1} > \epsilon_v^*$ and $\epsilon_{v2} < \epsilon_v^*$

S1206: Send LCI including an R-NACK

LCI including an R-NACK from another neighboring node

S1207: Retransmit the first data $x_1$

$x_1$

$x_1$

S1208: Update $x_1$ of the neighboring node u1 based on the retransmitted $x_1$

Iterate

FIG. 12

47

FIG. 13

Neighboring
node u2

Target node
v

Neighboring
node u1

Transmission
request from another
neighboring node

S1401: Send an initial
transmission request

S1401: Send an initial
transmission request

Transmission
request from another
neighboring node

$x_2$

S1402: Send first
data $x_2$

$x_2$

$x_1$

S1402: Send first
data $x_1$

$x_1$

S1403: Perform inference by using a locally
stored machine learning model to obtain $\hat{c}_v$,
and calculate a robustness probability

S1404: When $p_v^{(r)}$
$> p_v^{(t)}$, output $\hat{c}_v$

S1404: When $p_v^{(r)} < p_v^{(t)}$, estimate a BER
between the target node v and the neighboring
node u1, and compare the BER with $\epsilon_v^*$

S1405: Obtain $\epsilon_{v1} > \epsilon_v^*$ and $\epsilon_{v2} < \epsilon_v^*$, and estimate
a channel between the target node v and the
neighboring node u1, and calculate $P_{vu1}^*$

$\sim$
TO
FIG. 14B

$\sim$
TO
FIG. 14B

$\sim$
TO
FIG. 14B

FIG. 14A

Power control signaling
$(P^*_{iu1}, P^*_{ju1}, P^*_{ku1} \cdots)$
from another
neighboring node

S1406: Send LCI $(P^*_{vu1})$

S1407: Adjust a transmit power to
$\min\{\max\{P^*_{vu1}, P^*_{iu1}, P^*_{ju1},$
$P^*_{ku1} \cdots\}, P^{max}_{u1}\}$, and broadcast
the retransmitted first data $x_1$

$x_1$

$x_1$

Solution 1

S1407': Adjust a transmit
power to $\min\{P^*_{vu1}, P^{max}_{u1}\}$,
and unicast the first data $x_1$
to the target node v

Adjust the transmit
power to another power level,
and unicast the retransmitted
first data $x_1$ to each of
neighboring nodes i, j, k...

Solution 2

S1408: Update $x_1$ of the
neighboring node u1 based on
the retransmitted $x_1$

Iterate

FIG. 14B

EP 4 412 287 A1

| Neighboring node u2 | | Target node v | | Neighboring node u1 |

Transmission request from another neighboring node

S1501: Send an initial transmission request

S1501: Send an initial transmission request

Transmission request from another neighboring node

$\mathbf{x_2}$

S1502: Send first data $x_2$

$\mathbf{x_2}$

$\mathbf{x_1}$

S1502: Send first data $x_1$

$\mathbf{x_1}$

S1503: Perform inference by using a locally stored machine learning model to obtain $\hat{c}_v$, and calculate robustness

S1504: When $z(\mathbf{q}_v, \hat{H}_v) < D^{max}$, output $\hat{c}_v$

S1504: When $z(\mathbf{q}_v, \hat{H}_v) > D^{max}$, determine whether signal receiving is interrupted

S1505: When the neighboring node u1 has an outage and the neighboring node u2 has no outage, estimate a channel between the target node v and the neighboring node u1, and a transmission rate of the neighboring node u1, and calculate $P^*_{vu1}$

TO FIG. 15B

TO FIG. 15B

TO FIG. 15B

FIG. 15A

CONT.
FROM
FIG. 15A

CONT.
FROM
FIG. 15A

CONT.
FROM
FIG. 15A

LCI
$(P^*_{iu1}, P^*_{ju1}, P^*_{ku1} \dots)$
from another
neighboring node

S1506: Send LCI $(P^*_{vu1})$

S1507: Adjust a transmit power to
$\min\{\max\{P^*_{vu1}, P^*_{iu1}, P^*_{ju1}, P^*_{ku1} \dots\}, P^{max}_{u1}\}$, and broadcast
the retransmitted first data $x_1$

$x_1$

$x_1$

Solution 1

S1507': Adjust a transmit
power to $\min\{P^*_{vu1}, P^{max}_{u1}\}$, and
unicast the retransmitted first
data $x_1$ to the target node v

Adjust the transmit
power to another power level,
and unicast the retransmitted
first data $x_1$ to each of
neighboring nodes i, j, k...

Solution 2

S1508: Update $x_1$ of the
neighboring node u1 based on
the retransmitted $x_1$

Iterate

FIG. 15B

| Neighboring node u2 | | Target node v | | Neighboring node u1 |

Transmission request from another neighboring node

S1601: Send an initial transmission request

S1601: Send an initial transmission request

Transmission request from another neighboring node

$x_2$

S1602: Send first data $x_2$

$x_2$

$x_1$

S1602: Send first data $x_1$

$x_1$

S1603: Perform inference by using a locally stored machine learning model to obtain $\hat{c}_v$, and calculate a robustness probability

S1604: When $p_v^{(r)} > p_v^{(t)}$, output $\hat{c}_v$

S1604: When $p_v^{(r)} < p_v^{(t)}$, estimate a BER between the target node v and the neighboring node u1, and compare the BER with $\epsilon_v^*$

S1605: Obtain $\epsilon_{v1} > \epsilon_v^*$ and $\epsilon_{v2} < \epsilon_v^*$, and estimate a channel between the target node v and the neighboring node u1, and a transmission rate of the neighboring node u1, and determine a suggested first level of an MCS

TO FIG. 16B

TO FIG. 16B

TO FIG. 16B

FIG. 16A

FIG. 16B

EP 4 412 287 A1

Neighboring
node u2

Target node
v

Neighboring
node u1

Transmission
request from another
neighboring node

S1701: Send an initial
transmission request

1701: Send an initial
transmission request

Transmission
request from another
neighboring node

$x_2$

S1702: Send first
data $x_2$

$x_2$

$x_1$

S1702: Send first
data $x_1$

$x_1$

S1703: Perform inference by using a locally
stored machine learning model to obtain $\hat{c}_v$,
and calculate robustness

S1704: When
$z(\mathbf{q}_v, \hat{H}_v) < D^{max}$,
output $\hat{c}_v$

S1704: When $z(\mathbf{q}_v, \hat{H}_v) > D^{max}$, determine
whether signal receiving is interrupted

S1705: When the neighboring node u1 has an
outage and the neighboring node u2 has no
outage, estimate a channel between the target
node v and the neighboring node u1, and a
transmission rate of the neighboring node u1,
and determine a suggested first level of an MCS

TO
FIG. 17B

TO
FIG. 17B

TO
FIG. 17B

FIG. 17A

FIG. 17B

CONT. FROM FIG. 17A

CONT. FROM FIG. 17A

CONT. FROM FIG. 17A

S1706: Send LCI (the first level of the MCS)

LCI (MCS level suggestion) from another neighboring node

Recoded first data $x_1$

Recoded first data $x_1$

Recoded first data $x_1$

S1707: Use a lowest level of an MCS in all received MCS level suggestions to broadcast a modulation and coding scheme indication and the recoded first data $x_1$

Solution 1

Adjust a level of an MCS to a level of an MCS suggested by another neighboring node, and unicast the modulation and coding scheme indication and the recoded first data $x_1$ to each corresponding neighboring node

S1707': Unicast a modulation and coding scheme indication and the recoded first data $x_1$ to the target node v based on a level of an MCS suggested by the target node v

Solution 2

S1708: Update $x_1$ of the neighboring node u1 based on the retransmitted $x_1$

Iterate

FIG. 18A

EP 4 412 287 A1

FIG. 18B

Communication apparatus 1900

Transceiver unit 191

Processing unit 192

FIG. 19

Communication apparatus 2000

Processor 201

Interface circuit 202

Memory 203

FIG. 20

## INTERNATIONAL SEARCH REPORT

International application No.

**PCT/CN2022/125651**

| A. | CLASSIFICATION OF SUBJECT MATTER |
| --- | --- |

H04W 24/02(2009.01)i

According to International Patent Classification (IPC) or to both national classification and IPC

| B. | FIELDS SEARCHED |
| --- | --- |

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNKI, CNAPT, EPODOC, WPI: 学习, 推理, 华为, 分布式, 鲁棒性, 调制编码, 误码率, 功率控制, 自动重传, 邻居, 传输错误, 采集, ARQ, AMC, MCS, learning, ML inference, collect, distribute, neighbor, robust

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112188504 A (ARMY ENGINEERING UNIVERSITY OF PLA) 05 January 2021 (2021-01-05)<br>    description, paragraph [0056] | 1-36 |
| A | CN 107872775 A (ALCATEL LUCENT) 03 April 2018 (2018-04-03)<br>    entire document | 1-36 |
| A | CN 110135575 A (INTEL CORP.) 16 August 2019 (2019-08-16)<br>    entire document | 1-36 |
| A | AU 2020103326 A4 (SOUTHWEST UNIVERSITY) 14 January 2021 (2021-01-14)<br>    entire document | 1-36 |
| A | US 2020167258 A1 (INTEL CORP.) 28 May 2020 (2020-05-28)<br>    entire document | 1-36 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 November 2022** | **30 November 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/125651**

| Patent document cited in search report | | | Publication date (day/month/year) | Patent family member(s) | | | Publication date (day/month/year) |
|---|---|---|---|---|---|---|---|
| CN | 112188504 | A | 05 January 2021 | | None | | |
| CN | 107872775 | A | 03 April 2018 | US | 2018090009 | A1 | 29 March 2018 |
| | | | | EP | 3300047 | A1 | 28 March 2018 |
| | | | | KR | 20180034268 | A | 04 April 2018 |
| CN | 110135575 | A | 16 August 2019 | US | 2022245454 | A1 | 04 August 2022 |
| | | | | EP | 3506095 | A2 | 03 July 2019 |
| | | | | US | 2019205745 | A1 | 04 July 2019 |
| AU | 2020103326 | A4 | 14 January 2021 | | None | | |
| US | 2020167258 | A1 | 28 May 2020 | DE | 102020132078 | A1 | 29 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111231099